# EUROPEAN PATENT SPECIFICATION

(11) **EP 0 426 705 B1**
(45) Date of publication and mention of the grant of the patent: **08.01.1997**
(21) Application number: 89907983.4
(22) Date of filing: 21.06.1989
(51) Int. Cl.: A01N 25/10, A01N 25/34

(54) **TERRESTRIAL DELIVERY COMPOSITIONS**
ZUSAMMENSETZUNGEN ZUR VERABREICHUNG VON INSEKTIZIDEN
COMPOSITIONS A LIBERATION TERRESTRE

(30) Priority: 24.06.1988 US 210792
(43) Date of publication of application: 15.05.1991
(60) Divisional application: 96105902.9
(73) Proprietor: Stockhausen GmbH, D-47805 Krefeld (DE)
(72) Inventor: LEVY, Richard, Fort Myers, FL 33908 (US)
(74) Representative: Grünecker, Kinkeldey, Stockmair & Schwanhäusser Anwaltssozietät
(86) International application number: PCT/US89/02702
(87) International publication number: WO 89/12450

(56) References cited:
- EP-A- 0 050 375
- WO-A-85/01736
- GB-A- 1 313 892
- GB-A- 2 080 687
- US-A- 3 253 985
- US-A- 3 857 934
- US-A- 4 344 857
- US-A- 4 678 684
- US-A- 4 701 326
- US-A- 4 722 838
- US-A- 4 818 534
- US-A- 5 037 654
- CHEMICAL PATENTS INDEX, BASIC ABSTRACTS JOURNAL Section Ch, Week 8520, 10 July 1985 Derwent Publications Ltd., London, GB; Class C, AN 85-120188/20

## Description

The present invention relates to a facile method of applying a solid or flowable (aqueous or oil base) terrestrial delivery composition with one or more active insecticidal ingredients, with or without additional nontoxic ingredients, to control a variety of terrestrial (i.e., non-aquatic) insects or pests ((mainly insects and their close relatives (Arthropoda) as well as rodents (Muridae), nematodes, fungi, and weeds)) that are pests of ornamentals and turf, livestock, forest and shade trees, field crops and pastures, fruits and nuts, households, poultry, stored products, and vegetables with conventional ground or aerial techniques.

This invention further relates to a facile method of combining, mixing, encapsulating, agglomerating, or formulating one or more superabsorbent polymers with two or more active insecticidal or pesticidal ingredients, optionally with water, with or without various nontoxic adjuvants, diluents or carriers, e.g., into solid powders, dusts, granules, pellets, extrusions or briquets, and/or into aqueous (or oil base) flowable, variable viscosity sols or semi-gels. The use of superabsorbent polymers in this manner makes possible the mixing or application of insecticidal ingredients or pesticidal ingredients, with or without other additives, that would otherwise be difficult or substantially impossible to combine as joint- or multiple-action solid or flowable formulations.

The present invention also relates to a solid (i.e., powdered, extruded, flaked, granular, pelleted, briquetted) or variable viscosity flowable (i.e. sprayable, pumpable, injectable) terrestrial pest control delivery compositon made from one or more solid superabsorbent polymers with or without water, and with one or more insecticidal agents, such as insecticides, ovicides, larvicides, pupicides, biological control agents, pathogens, parasites, microbial control agents, insect growth regulators, conventional toxicants, fumigants, systemics, chemosterilants, pheromones, attractants, repellents, or with one or more solid or liquid pesticidal agents such as acaricides, miticides, pesticides, herbicides, hormones, sterilants, bactericides, fungicides, nematicides, ovicides, rodenticides, molluscicides, or predicides, or mixtures thereof, with or without one or more nontoxic adjuvants, diluents, or enhancers, such as carriers, baits, binders, deflocculating agents, fertilizers, penetrants, preservatives, spreading agents, surface active agents, surfactants, suspending agents, wetting agents, stabilizing agents, compatability agents, sticking agents, waxes, oils, inverting oils, co-solvents, coupling agents, foams, antifoaming agents, synthetic plastics, elastomers, synergists, natural or synthetic polymers; and other additives and mixtures thereof.

In particular, the present invention is directed toward a method of formulating and applying one or more superabsorbent polymers with one or more insecticidal agent(s), and one or more pesticidal agent(s), with or without water or other addivites, into solid powders, dusts, granules, pellets, extrusions, or briquets, or into flowable, variable-viscosity compositions such as sols or semigel-like formulations that can produce quick, slow, controlled, prolonged, or extended release of the active ingredients to simultaneously or concurrently control a variety of mature or immature terrestrial insects, and other non-insect pests in a variety of terrestrial habitats with a single application of a solid or flowable multi-product formulation.

Mode of action (e.g., fumigant, contact, slow-release, stomach poison, systemic, bait) will be dependent on the type(s) of insecticide(s), pesticide(s) and polymer(s) used in the solid or flowable compositions, the type of terrestrial habitat, and the species of insect(s) or pest(s) to be controlled. Release of the active agent(s) is via a polymer matrix water activation/swelling/diffusion mechanism and by environmental degradation of the polymer encapsulation matrix.

US-A-4,400,391 and US-A-4,401,456 disclose the use of alginate gel beads to encapsulate bioactive materials to provide for their controlled release. The patents describe beads being made to either float or sink (if used in an aqueous environment) and they may contain herbicides. These beads are also described as acting as carriers to place the bioactive material near the target species, for example, a floating bead containing a herbicide releasing the herbicide in close proximity to floating aquatic weeds or the beads falling through foliage to release herbicide into the soil.

US-A-4,344,857 involves encapsulation by xanthate derivatives. The encapsulation techniques are complicated, costly and quality sensitive.

US-A-3,575,760, to Gould et al., describes a method for entrapping fragrances, detergents, enzymes, food flavors and pesticides in a water soluble polymer. The entrapment is described as accomplished by mutually dissolving the water soluble polymer and the entrapped additive, which are then dried (e.g., spray dried). The primary purpose of this technique is to protect the entrapped species prior to target delivery. The polymers instantly dissolve in water and as such are unsuitable for controlled release. The technique is further limited in the types and quantities of entrapable compounds.

Mueller et al., US-A-4,304,591, employs an allegedly novel free radical polymerized hydrogel. The ingredients are incorporated into the hydrogel primarily by presence in the polymerization solution, however some medicants are stated as suitably diffused into the matrix via a solvent medium thereafter. This method is limited in both the capacity of the hydrogel matrix and its abilty to incorporate diverse, and potentially incompatible agents. The major effective use contemplated for this matrix is the delivery of medicants.

GB-A-2,108,517, discloses a hydrogel having at least one polymerizable cyclic (thio)ether and at least one hydrophilic homo-or co-polymer. This composition like Mueller et al. is stated as being particularly for treatment of tropical diseases.

A relatively new approach to insecticidal and pesticidal delivery has been by application of controlled-release formulations, to varying degrees of success, such as described by Richard W. Baker in Controlled Release of Biologically Active Agents, 1987, Wiley-Interscience Publishing, 279, pp. This text generally describes the use of various controlled release technologies including simple diffusion from monolithic devices such as hydrogels. However, this method is normally limited by hydrogel capacity and difficulties with incorporation of the desired agent, particularly hydrophilic substances. The capacity and incorporation problems with monolithic devices are often addressed by reservoir devices. More complex release mechanism includes the use of biodegradable matrix carriers, namely, bonding of active ingredients in heterogeneously or homogeneously degradable polymers, called polyagents. Polyagents may actually be polymers formed of monomers of the active agent. The release mechanics of those controlled release mechnanisms are complex, depending on the presence (and strength) or absence of degradable ligand bonds and their location (e.g., as active agent bonds to the polymer), concentration of the active agent and/or dispersant or solvent in the carrier, the relative hydrophobicity or hydrophilicity of the polymer, whether or not the polymer degrades homogeneously or heterogeneously, whether the active agent is in the solid form or liquid form in the polymer, etc. Further formation of such polyagents is complicated and often reagent specific.

It is an object of the present invention to provide insecticidal, pesticidal, or insecticidal/pesticidal compositions that are solid or flowable for use in the ground or aerial treatment of a variety of terrestrial habitats which overcome the problems and deficiencies of the prior art; which are easy to prepare (formulate) and use (apply), and which are erodible (biodegradable) and safe to the environment, but which are effective for use in controlling one or more immature and mature stages of terrestrial insects or pests, particularly, but not exclusively, insects, and other arthropod pests; which are agglomerated or nonagglomerated compositions encapsulated or non-encapsulated within a water soluble degradable pouch, and may incorporate a wide variety of potentially incompatible insecticidal or pesticidal ingredients into a single, stable and homogeneous solid or flowable delivery system to control a broad spectrum of terrestrial insect populations or other habitat-asociated/related pests, in any target terrestrial habitat, and to provide for the variable time-release of the active ingredients. According to the present invention this object is achieved with the use of an insecticidal, pesticidal or insecticidal/pesticidal delivery composition comprising effective amounts of
(a) at least one superabsorbent solid organic polymer selected from polymers which absorb over 100 times their weight in water, (b) at least one insecticidal or pesticidal agent and (c) at least one compound selected from diluents, surface active/film-forming agents, surfactants, and oils in a variable time-release form for controlling a population of terrestrial insects or pests in a variety of natural or artificial terrestrial (non-aquatic) environments.

The present invention further provides a variable time-release method for controlling one or
more population(s) of terrestrial insects and/or other habitat-associated/related pests, comprising applying an insecticidal/pesticidal delivery composition according to any of claims 1 to 12 to a target habitat, insect, and/or pest, or host, in an amount effective to control the population of terrestrial insects and/or pests in a variety of natural or artificial terrestrial environment areas needing insect or pest control treatment or simultaneous or concurrent insect and pest control treatment.

The present invention provides a method for simultaneously or concurrently controlling two or more natural populations of terrestrial insects and habitat-associated terrestrial pests such as, e.g., mites, fungi, weeds, nematodes, birds, rodents, with a single, variable-density or variable-viscosity, insecticidal/pesticidal superabsorbent polymer carrier or matrix delivery formulation according to the present invention.

By incorporating one or more surface-active/film-forming agents surfactant(s) or oil(s) into a solid (encapsulated within the water soluble pouch) or into a stable and homogeneous, variable-viscosity, flowable insecticidal, pesticidal or insecticidal/pesticidal superabsorbent polymer(s) formulation according to the invention the rate of the release of one or more active ingredients from the delivery composition is slowed down. With the present invention it is possible to simultaneously or concurrently control two or more natural populations of terrestrial insects and/or habitat-associated/related pests that allows for broadcast coverage with a variety of solid or flowable superabsorbent polymer formulations with conventional application methods without significant losses to wind drift, while enhancing canopy penetration or target substrate adherence, and providing the active ingredient(s) and/or polymer matrix with increased resistance to, e.g., degradation from UV, volatilization, humidity, diffusion, microbial attack, temperature fluctuations, oxidation, seepage, run-off even after periods of wetting and drying.

The use of superabsorbent polymer(s) according to the present invention provides simple and easy techniques for the incorporation or encapsulation of a variety of insecticidal, pesticidal, and insecticidal/pesticidal ingredients, with or without other additives such as baits, into agglomerated solid carrier matrices, e.g., dense pellets, granules, water soluble pouches, or briquets, for the slow or controlled release of active agents in a variety of terrestrial habitats.

Agglomerated or non-agglomerated superabsorbent polymer formulations according to the present invention containing one or more diluent or adjuvant surface-active/film-forming agents, surfactant(s) or oil(s) (such as oil baits), can effect a mechanism for reducing the rate of water absorption (hence superabsorbent polymer swelling), and thereby slow down the rate of release of one or more active agent(s) from the solid matrices, and extend the field life or persistence of the active agent(s) for a period of time greater than would be expected with superabsorbent polymer formulations containing no surfactant(s) or oil(s). In addition, agglomerated compositions can impart increased resistance to the active agents encapsulated within the matrix to environmental degradation due to e.g., ultraviolet radiation (UV), humidity, diffusion, microbial attack, temperature effects, oxidation, seepage and run-off. Similarly, certain flowable, variable-viscosity superabsorbent polymer compositions according to the present invention formulated with one or more surface active/film-forming agents, surfactant(s) or oil(s), with or without water can slow or control the release rate of the active formulation ingredients, while enhancing target substrate adherence and minimizing wind drift loss.

The solid or flowable compositions of superabsorbent polymer(s) will be suitable with various insecticidal agent(s), and/or pesticidal agent(s) or other additive(s) which can be directly or indirectly placed in desired terrestrial habitat locations (e.g., indoor or outdoor) based on the type(s) of active ingredient(s), formulation(s), and insect or pest specie(s) to be controlled. In general, the superabsorbent carrier/diluent/encapsulation matrix, particularly when formulated with certain surface-active/film-forming agents, surfactants or oils, facilitates resistance to surface/ subsurface run-off or percolation losses of active agents, and can provide active agent and/or matrix protection from environmental degradation due to e.g., UV, volatilization, oxidation, humidity, microbial attack and temperature fluctuation, even after periods of wetting and drying. In addition, variable-viscosity sprayable, pumpable, or injectable formulations of superabsorbent polymer(s), water, and one or more surface-active/film-forming agent(s), surfactant(s) or oil(s), can effect a similar mechanism for variable time-release (i.e., slow or controlled release) of active ingredients in compositions, thereby extending the field life or persistence of the polymer(s) insecticide(s), and/or pesticides, for a greater period of time than would be expected with superabsorbent polymer formulations containing no surface-active/film-forming agent(s), surfactant(s) or oil(s). This can extend the field persistence of the active agent(s) in the superabsorbent polymer formulation, and thereby assure that the frequency of costly insecticidal or pesticidal retreatments per habitat will be reduced.

The invention has found particular application as an insecticidal agent, applied as a baited composition, particularly for ants for translocation into the pest habitat, typically by the insect. (e.g. imported fire ants). The composition applied as a powder, e.g., has the potential for dual physical/insecticidal dynamic behavior which enhances the effectiveness and activity of the active agent.

### Specific Aspects

In accordance with the invention an agglomerated or non-agglomerated solid (encapsulated or not encapsulated within a water soluble pouch) or variable-viscosity flowable (aqueous or oil base) insecticidal delivery composition for controlling populations of terrestrial insects is provided. The delivery composition is applied by ground or aerial techniques (i.e., by aircraft and trucks) to a variety of terrestrial (i.e., non-aquatic) habitats. The compositions include at least one superabsorbent polymer, and at least one insecticidal agent alone or in combination with water and at least one selected from oil, adjuvant(s), diluent(s), or carrier agent(s), or other additive(s), the superabsorbent polymer(s) and insecticidal agent(s) being present in a total amount effective to control the population of terrestrial insects. The diluent(s), adjuvant(s), carrier agent(s), or other additive(s) is at a concentration adapted to improve formulation component mixing, compatability, and/or stability and/or to allow proper impregnation or mixing of the insecticidal agent(s) on, and/or in the superabsorbent polymer(s). Insecticidal agents for the control of adult and/or immature development stages are selected from solid and/or liquid insecticides, ovicides, larvicides, pupicides, conventional toxicants, chemosterilants, fumigants, systemics, pheromones, attractants, insect growth regulators, repellents, biological control agents, microbial control agents, pathogens, parasites, and mixtures thereof.

Further, in accordance with the present invention, a solid or flowable, variable time release insecticidal delivery composition for controlling a population of terrestrial insects, which includes one or more superabsorbent polymer(s) and a mixture thereof, at least one insecticidal agent and at least one insecticidal adjuvant, carrier or diluent, the superabsorbent polymer, insecticidal agent(s), and adjuvant(s), carrier(s) or diluent(s) being present in a total amount effective to control a population of terrestrial insects, the variable time-release delivery composition is applied as a ground or aerial treatment to a variety of natural or artificial terrestrial (i.e., non-aquatic) habitats. Carrier, adjuvant, or diluent materials are selected from, e.g., surfactants, alcohols, film-forming agents, surface-active agents, petroleum or vegetable-and/or animal-base oils (e.g., an baits), and mixtures thereof, the carrier, adjuvant, or diluent being present at a concentration required to slow, control or vary the rate of release or active components in the solid or flowable superabsorbent polymer composition.

In another aspect the present invention provides an agglomerated or nonagglomerated solid (encapsulated or not encapsulated within a water soluble pouch) or variable-viscosity, flowable pesticidal delivery composition for controlling populations of terrestrial pests, which is applied by ground or aerial techniques (i.e., e.g., by aircraft and trucks) to a variety of terrestrial (i.e., non-aquatic) habitats. The compositions include at least one superabsorbent polymer, and at least one pesticidal agent, in combination with water or oil, adjuvant(s), diluent(s), or carrier agent(s), or other additive(s), the superabsorbent polymer(s) and pesticidal agent(s) being present in a total amount effective to control the population of non-insect terrestrial pests. The diluent(s), adjuvant(s), carrier agent(s), or other additive(s) are at a concentration adapted to improve formulation component mixing, compatability, and/or stability and/or to allow proper impregnation or mixing of the pesticidal agent(s) on, and/or in the superabsorbent polymer(s). Pesticidal agents are selected from solid and/or liquid pesticides, acaricides, miticides, nematicides, herbicides, hormones, sterilants, ovicides, rodenticides, molluscicides, predicides, bactericides, or fungicides, and mixtures thereof.

A further aspect of the present invention is a solid or flowable variable time-release pesticidal delivery composition for controlling a population of terrestrial pests which includes one or more superabsorbent polymer(s) and mixture thereof, at least one pesticidal agent and at least one pesticidal adjuvant, carrier, or diluent, the superabsorbent polymer, pesticidal agent(s), and adjuvant(s), carrier(s), or diluent(s) being present in a total amount effective to control a population of terrestrial pests, which is applied as a ground or aerial treatment to a variety of natural or artifical terrestrial (i.e., non-aquatic) habitats. Carrier, adjuvant, or diluent materials are selected from, e.g., surfactants, alcohols, film-forming agents, surface-active agents, petroleum or vegetable-base oils, and mixtures thereof, the carrier, adjuvant,or diluent being present at a concentration required to slow, control or vary the rate of release of active components in the solid or flowable superabsorbent polymer composition.

In yet another more detailed aspect of the present invention, there is provided a joint- or multi-action solid (encapsulated or not encapsulated within a water soluble pouch) or flowable, variable time-release insecticidal/pesticidal delivery composition for controlling a population of terrestrial environment insects and habitat-associated/related pests. The composition includes at least one superabsorbent polymer, at least one insecticidal agent, and at least one additional pesticidal agent (i.e., if the insecticidal agent does not have additional pesticidal applications), with or without water, and at least one selected from oil, additional nontoxic adjuvants, diluents, or other additives. Diluent, adjuvants, or other additive ingredients are selected from surfactants, surface-active agents, film-forming agents, petroleum oils, vegetable oils, penetrants, spreading agents, suspending agents, wetting agents, stabilizing agents, compatability agents, sticking agents, carriers, binders, cosolvents, coupling agents deflocculating agents, dispersing agents, waxes, oils, synthetic plastics, foams, anti-foaming agents, synergists, elastomers, natural or synthetic polymers, and other additives and mixtures thereof. The superabsorbent polymer(s), insecticidal agent(s), and additional pesticidal agent(s) and adjuvant(s) or diluent(s) are present in a total amount effective to simultaneously or concurrently control the population of terrestrial insects and habitat-related/related pests. The variable time-release delivery composition is applied as a ground or aerial treatment to the target terrestrial habitat.

A method for controlling a population of terrestrial environment insects or pests using a composition according to the present invention includes the steps of:
preparing or formulating an agglomerated or non-agglomerated solid or flowable, insecticidal or pesticidal delivery composition which includes at least one superabsorbent polymer and at least one insecticidal or pesticidal agent, with or without water and at least one selected from oil, or additional nontoxic adjuvants, diluents, carriers or other additives, by a series of soakings, washes, variable speed blendings, salt/electrolyte conditioning treatments or reactions, and/or temperature and moisture conditioning treatments or reactions;
applying said insecticidal or pesticidal delivery composition in an amount effective to control a population of terrestrial insects or pests, the delivery composition being applied by ground or aerial treatment to the desired terrestrial habitat.

With an insecticidal or pesticidal delivery composition according to the present invention, a population of terrestrial insects and habitat-related pests can be simultaneously or concurrently controlled. The method includes the steps of:
preparing or formulating an agglomerated or nonagglomerated solid or flowable, variable-viscosity insecticidal/pesticidal delivery composition which includes at least one superabsorbent polymer, at least one insecticidal agent and with at least one additional pesticidal agent (i.e., if the insecticidal agent does not have additional pesticidal applications) with or without water, or and at least one of oil, and/or nontoxic diluent, adjuvant, carrier, or additive agent by a series of soakings, washings, variable speed blending, salt/electrolyte conditioning treatments or reactions, and/or temperature and moisture conditioning treatments or reactions; and
applying said insecticidal/pesticidal delivery composition in an amount effective to simultaneously or concurrently control one or more populations of terrestrial environment insects and one or more populations of habitat-related pests (e.g., nematodes, mites, fungi, weeds, snails), with the delivery composition being applied by ground or aerial treatment to the terrestrial habitat.

A particular preferred advantageous application for the above insecticidal/pesticidal delivery composition(s) is against ants (e.g., fire ants) and other similar habitat-related pests. The composition according to the invention can readily incorporate oil-based baits and compatible and non-compatible active agents and/or adjuvants. The superabsorbent polymers, although not effective as pesticides in and of themselves, effectively enhance the activity of the active agent. This could be partially due to the extremely hydrodynamic behavior of the superabsorbent polymer. For example a conventional baited insecticide carrier foraged and brought into an ant colony or mound would require the ants to continually ingest or contact the baited hydrodynamically inactive carrier. With superabsorbent polymers, the extremely hydrodynamic behavior of the matrix will enable the polymer to swell and disrupt the colonies, hence simultaneously increasing worker activity, the surface area of the matrix and hence its presence in the colony, and the release rate of the carrier matrix. The extremely hydrophilic nature of the polymer enhances this process even absent direct wetting, by enabling swelling by preferential absorption of surrounding subsurface moisture.

The superabsorbent polymers in accordance with the present invention are synthetic organic polymers, which are solid and hydrophilic, absorbing over 100 times their weight in water. These superabsorbent polymers are substantially water insoluble, and can be acrylamide and acrylate polymers, co-polymers and terpolymers which are optionally crosslinked or grafted. These superabsorbent polymers are typically in a powder, crystal, extruded, or flake form, adapted to be blended and/or agglomerated into a desired shape or form. The superabsorbent polymers may be, for example, acrylamide alkali metal acrylate co-polymers; propenenitrile homo-polymers, hydrolyzed alkali metal salts; polymers of propeneamide and propenoic acid, alkali metal salts; hydrolyzed acrylonitrile co-polymers and starch graft co-polymers and ter-polymers thereof. All of these are designed to be hydrophilic, absorbing over 100 times their weight in water.

The solid or flowable superabsorbent polymer formulations may be composed of one or more of a wide choice of solid and/or liquid insecticidal agents, such as insecticides, larvicides, pupicides, ovicides, hormones, insect growth regulators, conventional toxicants, fumigants, systemics, pheromones, repellents, chemosterilants, attractants, and/or one or more pesticidal agents such as miticides, acaricides, herbicides, hormones, molluscicides, sterilants, growth regulators, rodenticides, ovicides, fungicides, bactericides, or predicides, and at least one nontoxic agent such as surfactants, spreading agents, fertilizers, adjuvants, carriers, binders, deflocculating agents, dispersing agents, synergists, penetrants, suspending agents, baits, sticking agents, wetting agents, stabilizing agents, compatability agents, co-solvents, coupling agents, foams, anti-foaming agents, diluents, waxes, oils, synthetic plastics, elastomers, inverting oils, natural or artificial polymers, and other additives and mixtures thereof; depending on the type or nature of the terrestrial habitat to be controlled, the environmental impact, and/or the developmental stage(s) and/or insect and/or pest specie(s) to be controlled. The solid or flowable formulations are biodegradable. They are also storage stable when formulated, basically as stable as the individual components; however, increased stablity may occur in solid matrix form over the flowable form. Solid or flowable superabsorbent polymer formulations according to the present invention can take a wide variety of shapes, forms, and consistencies which may be required for a particular application. The solid or flowable superabsorbent polymer formulations can have a variable time-release, either quick, or gradual as the situation requires. The present invention provides a superabsorbent polymer carrier, suspending, compatability, formulating, protective or encapsulation agent for the variable time release or delivery of joint- or multiple-action formulations of liquid and/or solid insecticidal, pesticidal, and insecticidal/pesticidal agents that would otherwise be difficult or impossible to combine or mix as technical or water-base products into a homogeneous or non-homogeneous solid or homogeneous flowable formulation.

Solid or flowable insecticidal superabsorbent polymer bait or non-bait formulations in accordance with the present invention can be used to control terrestrial (non-aquatic) insects in any type of infested terrestrial area requiring control treatment. If necessary, the solid or flowable insecticidal superabsorbent polymer formulations can also be combined with additional pesticides to simultaneously or concurrently control terrestrial insects and habitat-related/associated pests such as e.g., mites, nematodes, weeds, fungi and rodents, in a variety of terrestrial habitats that contain the target insect(s) or pest(s) (direct treatment) or that will eventually contain the target insect(s) or pest(s) (pretreatment). The solid water-activated hydrodynamic compositions have the ability to revert back to a dry state form and return to a wet release form and back again, depending on the habitat and/or climatological temperature/moisture/UV conditions. This ability to transform from a water-activated release form to an encapsulated dry or moist inactive, semi-active, static, or bait form that can help protect the active agents from environmental degradation (e.g., from UV, volatilization, microbial attack, temperature fluctations, oxidation and diffusion) and back again (hence variable time release), is a distinct advantage of the instant invention. This transformation/retransformation ability can also be found in the flowable compositions; however, to a lesser degree.

Compaction or agglomeration of the superabsorbent polymer matrix has been shown to effect a slow or controlled release mechanism for certain active ingredients. In addition, varying the ratio of different types of these superabsorbent polymers, that have differential water uptake or swelling characteristics (e.g., Super Sorb, Aqua Keep®, Water Lock®, Aridall®, and Aquastore® products), in a single compacted or agglomerated matrix may effect a mechanism to further enhance the slow release of certain active insecticidal, pesticidal, or insecticidal/pesticidal ingredients. The utilization of homogeneous (uniformly distributed ingredients) or non-homogeneous (layered ingredients) incorporation of two or more active agents into the solid composition composed of two or more polymers can also be used to vary the release rate and sequence of delivery into a desired habitat. The utilization of non-homogeneous solid compositions (i.e., active ingredients and/or polymers not uniformly distributed throughout matrix compositions) containing layers or stratifications of one or more active agents and/or superabsorbent polymers in a position or location for desired sequential release of active components from the solid matrix are possible. Active insecticidal and/or pesticidal agents can be formulated (i.e., layered) into a pellet from the central core to the periphery by disc pelletizing techniques.

Additional controlled release modifications can be obtained by the encapsulation of solid agglomerated or non-agglomerated compositions within walls (e.g., a pouch) composed of at least one water-soluble and/or biodegradable material selected from the group consisting of polyvinyl alcohol, polyethylene oxide and hydroxy propylmethyl cellulose, with or without cellulosic or paper laminates. Furthermore, the addition of adjuvants, carriers, or diluents such as surface active/film-forming agents, oils or surfactants to the insecticidal, pesticidal, or insecticidal/pesticidal formulation further provides a mechanism to control (i.e., slow) the rate of release of the active ingredients. This advantage is particularly unique due to the relative ease of incorporation, and capacity of the superabsorbent hydrophilic polymer formulations for the mainly hydrophobic release controlling agents. As these hydrophobic agents can also have particular application as active agents the functions of controlled release variability can be joined with activity. Release of active ingredients into a terrestrial environment can also be affected by the degree of polymer matrix degradation due to e.g., ultra-violet radiation and microbial decomposition. Surface-active/film-forming agents, oils or surfactants can also retard environmental degradation of the polymer matrix.

Surprisingly it has been found that certain superabsorbent polymers constitute a novel class of chemicals useful as insecticidal/pesticidal delivery compositions for controlling populations of adult and immature insects and/or pests in a terrestrial environment area needing terrestrial insect/pest control treatment.

An insecticidal/pesticidal delivery composition is any composition which can carry, or be adapted to carry, insecticidal agent(s), pesticidal agent(s) or insecticidal and pesticidal agent(s), to the target habitat, natural or artificial, indoor or outdoor. The insecticidal/pesticidal delivery agent matrix for incorporation into solid or flowable compositions is broadly one or more superabsorbent polymers. Superabsorbent polymers, including starch graft co-polymers, are known in the art. See, for example, those described in US-A-4,375,535 and US-A-4,497,930, which have disclosed uses as adhesives, flocculants, sizes, water-retaining materials for agriculture and water-absorbing materials for sanitary materials. However, the spectrum of advantages attendant the use of superabsorbent polymers in solid and flowable terrestrial insecticidal, pesticidal or insecticidal/pesticidal delivery compositions have gone unrecognized.

The superabsorbent polymers according to the present invention are synthetic organic polymers which are solid and hydrophilic, absorbing over 100 times their weight in water. These superabsorbent polymers are typically in a powder, granule, extruded, or flake form, adapted to be blended and/or agglomerated into any shape or form.

The superabsorbent polymers may be, for example, acrylamide alkali metal acrylate co-polymers; propenenitrile homo-polymers, hydrolyzed, alkali metal salts; polymers of propeneamide and propenoic acid, alkali metal salts; hydrolyzed acrylonitrile co-polymers, and starch graft co-polymers and ter-polymers thereof. All of these are designed to be hydrophilic, absorbing over 100 times their weight in water. The resulting hydrophilic polymers can absorb from over one hundred to greater than about 5000, more typically around 500 to about 1,000 times their own weight in water (measured using distilled water, pH 7.5, 25°C, 760 mm Hg. absorption within about 30 s). However, the absorption or swelling capacity and absorption or swelling time typically varies with each specific superabsorbent polymer.

One class of superabsorbent polymers include combinations of a starch and organic monomers, oligomers, polymers, co-polymers or ter-polymers. They may be manufactured in a variety of ways, for example, the methods described in US-A-4,375,535 and US-A-4,497,930, and can be, for example, the product of grafting corn starch (amylopectin) with acrylonitrile (an acrylic monomer or oligomer). A second class of superabsorbent polymers includes combinations of acrylamide and acrylate polymers, co-polymers and ter-polymers.

The superabsorbent polymers can also be propenoic or acrylonitrile/acrylamide-base polymers or co-polymers or ter-polymers that also show superabsorbency properties.

It has also been observed that superabsorbent polymers alone, or impregnated, mixed or combined with one or more insecticidal and/or pesticidal agent(s), with or without water or oil, or other additives have the ability to swell when in contact with water and release the impregnated substance(s) at rates that will vary with the type of solid or flowable formulation utilized. Superabsorbent polymers also have the ability under certain conditions to reform or contract to a congealed or crystal-like consistency similar to their original form when evaporation has caused the water to be removed from the sol, gels or gelly-like matrix, and then swell or regel when additional water is added. This ability to resume a functional or semifunctional active-agent, encapsulated release form after repetitive periods of wetting and drying in certain situations is advantageous for pretreatment and/or prolonged control release applications of solid or flowable insecticidal, pesticidal, or insecticidal/pesticidal formulations. Specifically, it has been found that when the superabsorbent polymer is impregnated or mixed with a surface-active/film-forming agent(s), surfactant or oil, water will be absorbed at a slower rate, thereby indicating that active agents in the solid matrix or flowable matrix formulations will be differentially released at slower rates than would be expected with formulations containing no surface-active/film-forming agents, oils or surfactants. Also, environmental decomposition of the polymer matrix from e.g., UV and microbial decomposition, will be slower than matrices containing no surface active/film-forming agent, surfactant or oils.

Specific examples of superabsorbent polymers with differential swelling properties, and which are particularly useful in solid or flowable insecticidal, pesticidal, or insecticidal/pesticidal delivery formulations include:
1) a co-polymer of acrylamide sodium acrylate (Terra-Sorb® GB);
2) hydrolyzed starch-polyacrylonitrile (Tera-Sorb®);
3) 2-propenenitrile, homo-polymer, hydrolyzed, sodium salt or poly (acrylamide-co-sodium acrylate) or poly (2-propeneamide-co-2-propenoic acid, sodium salt), (Water Lock® Superabsorbent Polymer G-100);
4) starch-g-poly (2-propeneamide-co-2-propenoic acid, sodium salt), (Water Lock® Superabsorbent Polymer A-100);
5) starch-g-poly (2-propeneamide-co-2-propenoic acid, Sodium salt), (Water Lock® Superabsorbent Polymer A-200);
6) starch-g-poly (2-propeneamide-co-2-propenoic acid, potassium salt), (Water Lock® Superabsorbent Polymer B-204);
7) poly (2-propeneamide-co-2-propenoic acid, sodium salt), (Water Lock® Superabsorbent Polymer G-400);
8) poly-2-propenoic acid, sodium salt (Water Lock® Superabsorbent Polymer J-500 or Aqua Keep® J-500);
9) sodium polyacrylate superabsorbent polymers (Aqua Keep® J-400 and J-550);
10) starch g-poly (acrylonitrile) or poly, 2-propeneamide-co-sodium acrylate), (General Mills SP 5025);
11) starch acrylonitrile co-polymer (Super Sorb/AG Sorbent);
12) cross-linked modified polyacrylamides (Aquastore® and Aquastore® F);
13) cellulosic laminates of poly-2-propenoic acid, sodium salt (Water Lock® Superabsorbent Laminates L-413, L-415, L-425, L-435, or L-513);
   and
14) cross-linked acrylics (Aridall® 1078, 1080, 1091, 1125, 1092, or 1098).

Superabsorbent polymers are generally nontoxic biodegradable, and relatively inexpensive to buy or produce.

Insecticide and commercial formulations of these materials that may find application in the present solid or flowable insecticidal delivery compositions include cyclo compounds; carbamates; animal plant derivatives, synthetic pyrethroids, and inorganic compounds; diphenyl compounds and other nonphosphate insecticides; organophosphates-phosphoric acid prototypes; organophosphates-thiophosphoric acid prototypes; and organophosphates - dithiophosphate prototypes. Specific insecticides and formulations of these materials, the terrestrial insects that they control, effective application rates, toxicity, etc., are discussed by W.T. Thomson, 1985, in Agricultural Chemicals, Book Insecticides 1986-86 Revision, Thomson Publications, Fresno, California, 255 pp.

Surfactants, film-forming/surface-active agents, or oils, useful in solid or flowable formulations of the present invention as, e.g., carriers, diluents, adjuvants, and release rate modifiers, are generally organic chemicals that are soluble to essentially insoluble in water. They are generally nonionic, nonvolatile and can be liquid, semisolid, or solid; however, they can be anionic or cationic, if necessary. They may have a low freezing point and a boiling point above the maximum air temperature of the environment into which they are placed. Examples of liquid, semisolid, or solid surfactant film-forming or surface-active agents useful in conjunction with the present invention are the organic chemicals described in US-A-4,160,033. Film-forming agents, surfactants, or alcohols such as 2-propanol, tridecyl alcohol, 2-ethyl butanol, 2-ethyl hexanol, 1-hexanol, acetone, sylene, decyl alcohol, polyoxyethylene (20) sorbitan trioleate, polyoxyethylene alkyl aryl ether, polyoxyethylene (5) sorbitan monooleate, isostearyl alcohol containing 10 oxyethylene groups, Morwet® surfactants, isostearyl alcohol containing 20 oxyethylene groups; cetyl alcohol; stearyl alcohol; or petroleum-base oils such as, e.g., mineral oils and diesel oils, and mixtures thereof may also be used.

Various other exemplary surfactants include higher fatty acids, higher alcohol sulfate, alkyl aryl sulfonates, polyoxyethylene alkyl phenol ether, polyoxyethylene alkylamine, polyoxyethylene aklylamide, poly(oxyethylene-oxypropylene) co-polymer and polyoxyethylene-polyoxypropylene alkylene diamine alkyl trimethyl ammonium salt, alkyldimethyl benzylammonium salt, alkylpryidinium salt, alkyl betaine or alkyl imidazoline sulfonate.

Water soluble and/or degradable films or materials useful in the fabrication of e.g., pouches, bags, walls and containers, for the encapsulation of solid agglomerated or non-agglomerated insecticidal, pesticidal, or insecticidal/pesticidal compositions are selected from the group consisting of polyvinyl alcohol, polyethylene oxide, and hydroxy propylmethyl cellulose, with or without cellulosic or paper laminates.

An insecticidal material is any chemical, agent, substance, or mixture thereof, used to control or kill adult or immature stages of insects in a variety of terrestrial (non-aquatic) habitats. Exemplary insecticidal materials can include insecticides, ovicides, larvicides, pupicides, adulticides, biological control agents, microbial control agents, hormones, pathogens, parasites, insect growth regulators, conventional toxicants, fumigants, systemics, chemosterilants, pheromones, attractants, repellents, surface-active agents, or petroleum or non-petroleum oils. Some insecticidal agents can have additional pesticidal applications.

A pesticidal material is any agent, substance, chemical, or mixture thereof used to control or kill adult or immature stages of non-insect pests in a variety of terrestrial (non-aquatic) habitats. Exemplary pesticidal materials can include nematicides, miticides, acaricides, herbicides, hormones, sterilants, molluscicides, growth regulators, rodenticides, fungicides, bactericides, ovicides, or predicides. Some pesticides can have additional insecticidal applications.

Insecticidal compositions in accordance with the present invention are specifically directed against species of insects in the Orders Orthoptera, Thysanura, Dermaptera, Isoptera, Psocoptera, Mallophaga, Anoplura, Thysanoptera, Coleoptera, Hemiptera, Homoptera, Lepidoptera, Diptera, Siphonaptera, Hymenoptera, and Collembola. Pesticidal compositions of the present invention can be directed against species of the Class Arachnida, Class Nematoda, Class Gastropoda, Order Rodentia, Class Aves, Family Talpidae, Family Sciuridae, Order Chiroptera, Suborder Serpentes, Class Diplopoda, Class Chilopoda, Class Crustacea, and the Myceteae.

Insecticidal and pesticidal agents or formulations (i.e., insecticides, pupicides, larvicides, miticides, ovicides, nematicides, insect growth regulators, repellents, attractants, fumigants, pathogens, rodenticides, etc.) useful in the present invention, and the insects or pests that they control are discussed in W.T. Thomas, 1985, Agricultural Chemicals, Book I Insecticides, 1985-86 Revision, Thomas Publications, Fresno, California, pp. 1-255, in George O. Poinar, Jr. and Gerald M. Thomas, 1978, Diagnostic Manual for the Identification of Insect Pathogens, Plenum Press, New York, pp. 1-218, in W.T. Thomas, 1986, Cultural Chemicals, Book III - Fumigants, Growth Regulators, Repellents and Rodenticides, 1986 Revision, Thomas Publications, Fresno, California, 187 pp, in George W. Ware, 1980, Complete Guide to Pest Control With and Without Chemicals, Thomson Publications, Fresno, California, 290 pp., in W.T. Thomson, 1986, Agricultural Chemicals, Book II Herbicides, 1986-87 Revision, Thomson Publications, Fresno Publications, Fresno, California, 301 pp., and in L.C. Truman and W.L. Butts, 1967, Scientific Guide to Pest Control Operations, Second Edition (Revised), Pest Control Magazine, Cleveland, Ohio, 187 pp.

Nontoxic adjuvant or diluent materials include water, carriers, baits, binders, fertilizers, deflocculating agents, penetrants, spreading agents, surface-active agents, surfactants, suspending agents, wetting agents, stabilizing agents, compatability agents, waxes, oils, inverting oils, co-solvents, coupling agents, foams, synergists, anti-foaming agents, synthetic plastics, elastomers, natural or synthetic polymers, and other additives and mixtures thereof.

A proposed aqueous absorbency mechanism of acrylic-based superabsorbent polymers has been described by the Chemdal Corporation (Arlington Heights, Illinois 60004) in their Technical Data Sheets on Aridall® Superabsorbent Polymers. The absorbency of acrylic-based superabsorbent polymers is attributed to carboxylic groups located on the backbone of the superabsorbent polymer. When natural (e.g., via rain, dew, metabolic or physiologic water) or artificial (e.g., via sprinklers and irrigation) water contacts the superabsorbent polymer, these groups solvate rapidly and develop mutually repulsive negative charges. This allegedly causes the superabsorbent polymer to uncoil and absorb many times its weight in water. Crosslinking prevents solution of the super-absorbent polymer. The aqueous medium rapidly becomes oriented on the surface of the superabsorbent polymer by virtue of hydrogen bonding. The resulting gel has remarkable ability to hold the aqueous medium even under pressure.

Superabsorbent polymers appear to hold fluids by a physico-chemical mechanism. Electrolytes/salts interfere somewhat with the hydrogen bonding and effect the absorbency. Crosslinked acrylic-based superabsorbent polymers always absorb less aqueous medium when electrolytes/salts are present.

When formulations are made by the addition of water or water-base insecticides, pesticides, or insecticide/pesticide compositions to various concentrations of superabsorbent polymers or vise versa, sols or gels of various consistencies (viscosities) or stiffnesses can form that may or may not be flowable. However, high shear mixing or the addition of various salts/electrolytes can break or interfere with the gel structure or hydrogen bonding, thereby producing flowable (e.g., sprayable) superabsorbent polymer insecticide, pesticide, or insecticide/pesticide aqueous formulations that have the desired viscosity. Viscosity modification will mainly be a function of the active and/or inactive formulation components, the water absorption characteristics of the superabsorbent polymer (i.e., the type and amount of superabsorbent polymers), shear time and strength used to mix the formulation and/or the concentration and type of salts/electrolytes used to modify the sol or gel consistency of the formulation. Therefore, the viscosity of the aqueous formulation containing one or more superabsorbent polymers can be altered to achieve optimum flowability, droplet size and quantity, and thereby improve the general ground or aerial application characteristics of the formulation for maximum control of the target insect or pest. Furthermore, active insecticidal or pesticidal ingredients encapsulated in the viscous/semi-viscous but flowable aqueous superabsorbent polymer formulation can be protected from degradation from the effects of e.g., ultraviolet radiation, volatilization, oxidation, temperature, microbial activity, evaporation and run-off, particularly when used in solid compositions. Furthermore, evaporation of water from the flowable aqueous superabsorbent polymer/insecticide or pesticide formulation can result in a solid congealed-like insecticide/pesticide encapsulated matrix thereby protecting the active components for prolonged periods until release of the insecticidal, pesticidal, or insecticidal/pesticidal ingredient(s) is triggered by water, biodegradation, or when the formulation is eaten in bait form.

Water-activated and biodegradable superabsorbent polymers formulated into an agglomerated or nonagglomerated bait-control agent formulation can be removed from the application site by e.g., foraging insects, and subsequently translocated to mounds or nests for feeding to caste members and broods and/or used as structural building components and integrated directly into the mound or nest where the active control agent will be released and retained in close associated with the target population. This association is enhanced by the hydrodynamic nature of the superabsorbent formulation and its potentially disruptive nature in association with the target habitat (i.e., mound or nest). Formulations of this type can be particularly useful in controlling insects such as red and black imported fire ants, mole crickets, grasshoppers, etc., or rodents such as rats and mice. Once ingested, internal release of active ingredients in polymer-based bait formulations will be dependent on the various physiological parameters of the target insect or pest, e.g., on the water and/or electrolyte concentration of the gut, and on digestion, absorption, and excretion rates.

Applications in the release of insecticidal or pesticidal agents from solid or flowable superabsorbent polymer compositions in personal protection devices and in veterinary medicine (e.g., insecticidal/repellent polymer-base creams, pastes, or solids can be incorporated into fabrics for use in repellent jackets, ear tags for livestock, or cat/dog flea and tick collars) are also proposed.

The incorporation of active pesticidal agents (e.g., residual) into rigid or extruded superabsorbent polymers for controlled release applications is also contemplated. For example, a coating of superabsorbent polymer and insecticidal agent could be dipped or sprayed on selected interior wooden structures to form a protective controlled release barrier against termite attack, as well as attack from other wood-destroying insects and fungi. The use of these formulations in other interior or exterior pest control applications (particularly in interior dwelling structures) may also be considered.

It is further contemplated that the superabsorbent polymer formulations in accordance with the invention can be used with or without insecticidal or pesticidal agents in an agglomerated or nonagglomerated form as a treatment or pre-treatment for active pest breeding areas. For example the superabsorbent polymer formulations with or without active agents can be used as a moisture/water management aid to reduce or eliminate water that is necessary for the area to be treated to become an active pest breeding ground. For example, wet and damp silage and manure are commonly breeding areas for immature stages of flies. As a further application of the present invention it is contemplated that such areas would be treated directly or by use of injection techniques to rapidly remove water from the potential breeding areas. The composition will alter the breeding environment to make it unsuitable for that purpose while preventing the emergence of the adult forms of the immature stages already under development. As a treated medium area dries the polymer will promote the formation of a crust which further inhibits ovipositing insects and the emergence of mature stages under development. This procedure can be used in a number of pest breeding areas requiring moist conditions such as, e.g., silage and manure pits.

Impregnation or mixing of superabsorbent polymers with fatty alcohols, film-forming agents, surface-active agents, surfactants, or hydrophobic oils appears to delay or slow down the rate of water absorption of superabsorbent polymers, thereby providing a useful mechanism for slow or controlled release of insecticidal, pesticidal or insecticidal/pesticidal agents in terrestrial environments. The slow or controlled release process could be further modified or delayed by the degree of compaction of the powdered, crystal, extruded, or flaked superabsorbent polymer/insecticidal, or superabsorbent polymer/insecticidal/pesticidal agent formulation, by varying the size of an orifice in a container into which the insecticidal or pesticidal delivery composition is placed, by varying the concentration of adjuvants or diluents such as film-forming agent(s), surface-active agent(s), surfactant(s), or oil(s), by varying the concentration of different types of superabsorbent polymers, by utilization of water soluble/degradable pouches, and/or by adding one or more binders. When the matrix is wetted, water (concentration dependent) is differentially held within the gel-like or variable-viscosity, sol-like superabsorbent polymer matrix at a stiffness or strength that is dependent on whether a solid or flowable formulation is used (i.e., the amount of water in the formulation), and therefore evaporates slower than an equivalent amount of superabsorbent polymer-free standing water. Furthermore, the addition of film-forming agents, surface active agents, surfactants, or oils to the super-absorbent polymer(s) also appears to retard the rate of water loss. However, eventually the superabsorbent polymer will restore to a congealed or crystal-like state that can be similar to its initial condition when dry, with loss of active agent dependent on whether it is mixed in a surface-active/film-forming agent, oil or surfactant, the type of superabsorbent polymers, the presence of additional additives or diluents, and/or on the climatological/habitat moisture/water, UV, microbial activity, for instance, to which the formulation is exposed. These observations further suggest additional field persistence mechanisms for variable time-release (controlled release) of any active insecticidal, or pesticidal, or insecticidal/pesticidal ingredients which are added to the solid or flowable superabsorbent polymer formulations.

It should be noted that certain electrolytes or salts (e.g., alkali metal halides such as sodium chloride, potassium chloride, sodium sulfite, etc.) have been shown to either break down the gel or sol superabsorbent polymer matrix when introduced into or exposed to water by interfering with hydrogen bonding. Various concentrations of one or more salts/electrolytes can be added separately or included as an integral part of the active ingredient in the insecticidal, pesticidal, or insecticidal/pesticidal formulation. This has an impact on the viscosity, swelling and/or water absorbency of superabsorbent polymers and subsequent population control ability of the insecticidal, pesticidal or insecticidal/pesticidal delivery compositions, i.e., the swelling or water absorbency (hence controllability) of the superabsorbent polymer will directly affect the release rate of certain insecticidal, pesticidal or insecticidal/pesticidal agents that are impregnated therewithin. Therefore, it is possible to utilize certain salts or electrolytes directly or indirectly in superabsorbent polymer-base solid and flowable insecticidal, pesticidal or insecticidal/pesticidal formulations as another mechanism to regulate the viscosity (i.e., flowability) of aqueous formulations and alter or control (i.e., slow down) the release rate of solid and flowable formulations. The salt content of the terrestrial habitat when wetted may also have an effect on kill rate of the target species by affecting the solid or flowable superabsorbent polymer water absorbency, bonding, matrix swelling, breakdown, decomposition, and/or release of active insecticidal, pesticidal, or insecticidal/pesticidal ingredients. The addition of salts/electrolytes to the matrix formulation, in combination with salts/electrolytes in the terrestrial habitat, may also affect a mechanism to vary these factors.

The ability of the hydrophilic polymer to incorporate relatively large quantities of hydrophobic substances also renders the composition suitable for controlled slow release of such hydrophobic components. Such superabsorbent polymer compositions can be employed as a pest control active agent dispenser in enclosed areas and/or used with attractants to bring the pest toward the dispenser. The composition can also be used with suitable protective hydrophobic outer layer in a laminate, such as is disclosed in US-A-4,160,335, the substance of which is incorporated by reference. The hydrophobic protective layer should allow migration of the active pest control agent but should protect the superabsorbant composition from the effects of moisture, which would activate the hydrodynamic characteristics of the composition. In areas where the composition is not likely to contact with water the use of a protective hydropholic layer can be dispensed with and the composition used directly, such as in internal structural and functional materials. The composition can be extremely rigid when exposed to ordinary atmospheric moisture and could be used in drywall, insulation, paneling, ceiling tile, etc., without a hydropholic protective layer. The ease of incorporation and the broad spectrum of incorpable active agents makes the composition suitable for long-term formative protection of a broad spectrum of household pests. By incorporation of the superabsorbent polymer pest control composition into structural element it is possible to protect those inaccessable areas of a structure where pests are most likely to hide with a composition capable of both long term and broad spectrum effectiveness.

It should be noted that viscous/semi-viscous aqueous superabsorbent polymer compositions can be rendered flowable by the use of vigorous or high-shear mixing/agitation. Any suitable equipment or technique used to incorporate insecticides or pesticides into an aqueous emulsion can be suitably used to render a non-flowable superabsorbent-based composition flowable. Inverting oil techniques are also appropriate for mixing and dispensing a highly viscous aqueous superabsorbent polymer composition composed of water, at least one insecticidal and/or pesticidal agent, film-forming agent or oil, and with or without pesticides and/or other additives. The degree of mixing/agitation of the superabsorbent polymer-base aqueous composition will also have an effect on the variable release rate characteristics of active agents by effecting (i.e., breaking or disrupting) the bonding of water with the superabsorbent polymer matrix.

The specific gravity of the delivery composition can also be adjusted by the use of, e.g., solid or liquid surfactants, oils, surface active or film-forming agents, water, alcohols, clays, talcs, encapsulation films, or fillers which can include viscosity modifiers.

The water, surfactant, or oil-dissolved, suspended, or dispersed active agent can be incorporated into the super-absorbent polymer as an emulsion. This requires the use of suitable emulsifying agents to form a stable emulsion, however, an unstable emulsion may be preferred for certain applications. The emulsion can also be rendered somewhat ionic for example, by use of certain surfactants, to promote preferable ionic bonding with the superabsorbent polymers. Suitable emulsifiers such as ammonium lineolate, ethylene oxides adducts, acyl polyglycol ethers, oxyethylated fatty alcohols, alkali metal starches as discussed in US-A-2,347,680, or starch propionates as disclosed in US-A-4,059,458. However, any suitable known surfactant, surface-active agent, film-forming agent, or oil, can be employed.

The form of the solid delivery composition will be dependent on the particular contemplated application technique and target. Fine particulate compositions are usually preferred for foraging insects, which compositions are intended for use in their natural habitat (i.e., mound or nest). This can be accomplished by, e.g., high-shear mixing or fine agglomeration techniques. Suitably larger aggolmerates or particles are desirable for larger targets such as rodents. These and other variations would be readily apparent to one of skill in the art based on the above disclosure and the particular need at hand.

The amount of active agent in the delivery composition will depend on the target insect or pest, the active insecticidal or pesticidal agent involved, the superabsorbent polymer, whether or not water is present, and any additional adjuvants and/or diluents that are added. Generally, the weight ratio of superabsorbent polymer to insecticidal and/or pesticidal agent(s) and any additional diluent or adjuvant ingredient(s) is from about 0.1:100 to about 100:0.001, the insecticidal and/or pesticidal agent(s) being incorporated in the solid or flowable delivery composition for application at rates effective to control the target terrestrial insect and/or pest. The ratio of super-absorbent polymer(s) to any additive diluent or adjuvant such as a surfactant, oil, surface-active or film-forming agent(s) is from about 0.1:1 to about 100:1. The ratio of superabsorbent polymer to water in a flowable composition is generally 0.001:100 to 1:1.

### Examples 1 - 11

Bioassays and field evaluations were conducted to determine the efficacy of several solid or flowable super-absorbent polymer insecticidal bait and/or contact formulations in controlling several species of adult and immature terrestrial insects. Representative target terrestrial insects were the German cockroach Blattella germanica (Table 1), the red imported fire ant Solenopsis invicta (Tables 2 - 3), crickets of the family Gryllidae (Tables 4 - 5), and the yellow mealworm Tenebrio molitor (Tables 6 - 7). Bioassays against cockroaches, crickets, and mealworms were conducted in quart mason jars with screened lids at ca. 26°C (80°F) (ambient) while fire ants were tested under natural field conditions.

Insecticides used in the superabsorbent polymer formulations were Fenoxycarb (Ethyl [2-p-phenoxyphenoxy)ethyl]carbamate) or Dursban® 4E (O,O-Diethyl-0-(3,5,6-trichloro-2-pyridyl) phosphorothioate). Fenoxycarb (Dr. R. Maag Ltd., Dielsdorf, Switzerland) is a carbamate compound used as an insect growth regulator either by contact or as a stomach-poison. Fenoxycarb has been shown to be useful in controlling ants, cockroaches, fleas, ticks, chiggers, stored products insects, termites, spruce budworm, mosquitoes, gypsy moth, bollworms, cotton leaf perforator, pear psylla, scales, leafminers, and others. Dursban⁴ (Dow Chemical Co., Midland, MI 48640) is an organic phosphate insecticide which acts primarily by contact activity and as a stomach-poison. Dursban⁴ has been shown to be useful in controlling ants, aphids, boll weevil, bollworms, chinch bugs, cockroaches, corn borers, corn rootworm, crickets, cutworms, earwigs, grasshoppers, leafhoppers, mealybugs, mites, mosquitoes, peach tree borer, peach twig borer, scales, silverfish, spiders, thrips, ticks, tobacco budworms, webworms, whiteflies, white grubs, wireworms, and many others.

Superabsorbent polymers evaluated in the solid or flowable insecticidal formulations were Super Sorb, Water Lock® G-100, Water Lock® A-100, Water Lock® A-200, Water Lock® B-204, Water Lock®/Aqua Keep® J-500, Aquastore®, Aquastore® F, Aridall® 1078, Aridall® 1091, and/or Aridall® 1092.

Insecticides were mixed with or impregnated on/in superabsorbent polymers, with or without water, by vigorous hand-mixing or shaking (0.5-2 min), with a Fisher Dyna-Mix (Model 143) at 1,800 rpm (ca.0.5-1 min) and 2,400 rpm (ca. 2 - 3 min), and/or with a G.E. hand mixer (Model 420A) at low speed (ca. 2 - 3 min). The order of component mixing and the duration of mixing will be dependent on the type of superabsorbent polymers, the type of insecticidal or pesticidal ingredients used in the formulation,and/or the type of superabsorbent polymer formulation (i.e., solid or flowable).

Insecticides were formulated in the solid or flowable compositions for addition to the test chambers or natural habitats as a bait and/or contact formulation at rates recommended for the control of the target insect populations. Soybean oil or peanut oil was utilized as a diluent/bait in the superabsorbent polymer insecticidal formulations. Insecticidal compositions were placed in the target habitat as a bait or topically on the target insect.

The comparative rates of natural environmental degradation of powdered superabsorbent polymer-based compositions formulated with and without the 2 mol ethoxylate of isostearyl alcohol (Arosurf® 66-E2) or soybean oil (Table 8), and the subsequent active agent/matrix stability/activity (Table 9) were determined on sandy soil/grassy field/pond conditions.

The active agent release potential of a variety of superabsorbent polymer-bait (soybean oil), formulations translocated by fire ant workers into ant mounds were determined in natural field conditions (Table 10). Fire ants were allowed to forage on 20g of a polymer-bait formulation that was scattered around a mound. One soil core sample per mound was then taken ca. 11 days posttreatment with a PVC pipe (2.5-0.6cm (1-1/4 inch) ID) by driving the pipe into the center of the mound down to a distance of ca. 30.5cm (12 inches). The core was then removed and six, ca. 5cm (2 inch) samples were sequentially moved from the pipe beginning with the lowest depth and placed into a plastic cup of R.O. water (ca. 50 ml). Swelling was used to indicate polymer presence in the mound galleries or chambers and was used as the indicator for depth translocation and matrix stability and release potential.

### Example I

Results of bioassays concerning the comparative efficacy of solid superabsorbent polymer-base insecticidal compositions against nymphal stages of the German cockroach, Blattella germanica are presented in Table I. The data indicated that superabsorbent polymers can be used as the matrix for the creation of novel solid (or flowable) insecticide (fenoxycarb) bait formulations (contact or stomach poison) to provide control of cockroaches that are resistant to conventional organophosphate insecticides.

Fecal droppings throughout the test containers were observed to swell when a drop of water was added, thereby indicating the swelling activity and extended active agent release potential of the superabsorbent polymer bait formulations that had passed through the gastro-intestinal tract. Active superabsorbent polymer (i.e., swellable via the addition of water) was also recovered from the guts of dissected cockroaches that were fed on superabsorbent polymer compositions formulated with and without fenoxycarb. A drop of flowable semi-viscous compositions of several super-absorbent polymer-base fenoxycarb formulations applied to a dorso-thoracic area were observed to adhere to the cockroach cuticle and form a tiny dry crystalline patch or crystal-like formulation area 24 - 48 h posttreatment. The addition of water to this area resulted in swelling of the polymer formulation, and thereby suggested the controlled release potential of various flowable superabsorbent polymer-base insecticide/pesticide formations.

### EXAMPLE II

Results or field trials (Table 2) against adult and immature stages of the red imported fire ant with several solid superabsorbent and polymer-base fenoxycarb bait (soybean oil) formulations indicated that these solid bait formulations applied as powders or granules could be used to control natural populations of the imported fire ant. Observations of mounds that were treated with superabsorbent polymer-base bait compositions that were not formulated with fenoxycarb indicated that these formulations had no ant control potential.

### EXAMPLE III

Data from additional trials (Table 3) against natural populations of the imported fire ant with solid superabsorbent non-superabsorbent carrier matrices applied to the habitat in a powder or granular form, or in biodegradable/water soluble 0.05cm (2 mil) polyvinyl alcohol (PVA) pouches (Polymer Films Inc., Rockville, Conn. 06066 or Mono-Sol Division, Chris Craft Industries, Inc., Gary, Indiana 46043) indicated that effective control can be obtained with either type of application procedure. Foraging ants were observed with PVA pouches containing superabsorbent and non-superabsorbent formulations.

Matrix degradation observations over the 13 week test period reported in Table 3 suggested that superabsorbent polymer formulations remained more stable than zein (corn protein) formulations that were subjected to equivalent fluctuating environmental/climatological events (e.g., dew, rain, UV and microbial attack), and therefore could release, re-release, and/or protect the bioactive agent for a greater period of time than would be expected with non-superabsorbent polymer formulations. Additional comparative observations (Table 3) between superabsorbent and non-superabsorbent formulations encapsulated within PVA pouches indicated that enhanced field activity/stability/protection/persistence of the powdered or granular insecticidal formulation applied in PVA pouches could result, when subjected to adverse environmental/climatological pressures such as, e.g., rain, UV, microbial attack and oxidation. Non-fenoxycarb superabsorbent or non-superabsorbent matrix formulations encapsulated within PVA pouches were observed to have no insecticidal activity against natural fire ant populations.

### EXAMPLE IV

Comparative bioassays against crickets (Table 4) with several solid superabsorbent polymer-based bait (peanut oil and potatoes) Dursban® 4E formulations indicated that various superabsorbent polymers could be used in preparing effective insecticidal formulations for the control of adult and immature stages of crickets. Superabsorbent polymer formulations without Dursban® had no insecticidal activity against crickets. However, active polymer (i.e., swellable on the introduction in water) was recovered in cricket fecal droppings as well as in the guts of dissected crickets that were exposed to polymer compositions with and without Dursban®. Starch compositions appeared to be readily degraded/digested/water soluble, thereby indicating a poor biological/environmental persistence potential when compared to superabsorbent polymer formulations. This polymer stability suggested the potential for enhanced protection and prolonged release of insecticidal agents.

### EXAMPLE V

Comparative bioassays against crickets with variable-viscosity, flowable (Table 5) superabsorbent polymer-based Dursban® 4E bait/contact formulations indicated that effective cricket control could be obtained with these formulations. In general, the data indicated that super-absorbent polymer formulations generally kill faster than a formulation composed of non-superabsorbent materials (i.e., soluble starch). In addition, active polymer (i.e., swellable on exposure to water) was identified in fecal droppings, on hind torsal segments, lateral head regions, around the anal area, and in the gut of dissected specimens that were topically treated with both insecticidal and non-insecticidal formulations. All formulations were thoroughly cleaned (i.e., removed) from the topical application site. Evaporation of water from several flowable polymer formulations found on dead crickets over a 24 - 48 h period resulted in scale, patch, or crystal-like areas that adhered to various cuticular body regions where the polymer formulations were translocated. The addition of water to these areas resulted in polymer swelling. Results suggested mechanisms for potential polymer-induced active agent protection and controlled release.

### EXAMPLE VI

Comparative bioassays against larvae of the yellow mealworm (Table 6) with several solid superabsorbent polymer-based Dursban® 4E bait formulations indicated that effective control of immature stages could be obtained with powdered or granular polymer compositions. Polymer compositions without Dursban® had no significant insecticidal activity. In general, superabsorbent polymer formulations killed faster than a non-superabsorbent polymer (soluble starch) formulation. Matrix stability of superabsorbent polymer formulations suggested controlled release potential for one or more active agents incorporated in the composition.

### EXAMPLE VII

Comparative bioassays against larvae of the yellow mealworm with several flowable (Table 7) superabsorbent polymer-based Dursban® 4E bait/contact formulations indicated that variable viscosity polymer formulations could be used to control immature stages or the yellow mealworm. In general, a polymer-based formulations killed larvae faster than a non-superabsorbent polymer formulation. No insecticidal activity was observed in superabsorbent polymer compositions formulated without Dursban®. Active polymer (i.e., swellable on exposure to water) was observed on leg, thoracic, and abdominal regions of dead mealworms. Patches of crusty or scale/crystal-like areas of dehydrated polymer formulations were observed firmly adhered to these exoskeletal areas 24 - 48 h posttreatment. Swelling of these polymer-based areas resulted upon introduction of the larvae to water, thereby suggesting the active agent encapsulation and controlled release potential of flowable superabsorbent polymer-based formulations.

### EXAMPLES VIII - IX

Field evaluations concerning the comparative environmental persistence of technical and Arosurf® 66-E2 - or soybean oil - formulated superabsorbent polymers exposed to natural field conditions are presented in Table 8. Results indicated that a variety of polymer formulations containing Arosurf® 66-E2 or soybean oil persisted in natural habitats subjected to e.g. rain, UV, microbial attack and oxidation, significantly longer than technical polymers that were not formulated with these materials. In general, Arosurf® 66-E2 appeared to protect Super Sorb significantly better than soybean oil; however, the Super Sorb-soybean formulation persisted in the field significantly longer than technical Super Sorb. The comparative stability of these environmentally stressed solid superabsorbent polymer formulations of Arosurf® 66-E2 are presented in Table 9. This data (Tables 8 and 9) suggests that various oils, surface-active agents, film-forming agents, or surfactants can be used as a superabsorbent polymer formulation ingredient that can act as an insecticide/pesticide diluent or bait and/or as a protective agent to stabilize the polymer matrices and active insecticidal/pesticidal agents, and thereby enhance the field life, persistence, and release of active agents in natural habitats for longer periods of time than would be expected with insecticide/pesticide formulations not containing oils, surfactants, surface-active agents, or film-forming agents.

### EXAMPLE X

A series of field evaluations to determine the subsurface translocation of a variety of superabsorbent polymer-based bait (soybean oil) formulations by imported fire ant workers, and subsequent controlled release potential of these formulations are reported in Table 10. The data indicates that active polymers (i.e., water swellable) have the capacity for active agent release were present in the galleries or chambers of fire ant mounds at 11 days posttreatment at varying depths. Observed variations and similarities in subsurface locations among mounds were presumed to be related to polymer types, mound sizes, ant populations, subsurface soil profiles, and/or to the sample technique.

### EXAMPLE XI

Observation during the course of field evaluations to determine the environmental persistence of several 20g solid (powdered) superabsorbent polymer-base bait/diluent compositions indicated that a formulation composed of Water Lock® A-100 (50%) and soybean oil (50%) was extremely attractive to a wild racoon. Observations of racoon tracks around samples of 50 and 100% eaten polymer formulations indicated the feeding preference/attractiveness of raccoons to superabsorbent polymer-base compositions, and suggested the use of superabsorbent polymer bait-predicide formulations to control unwanted predator populations.

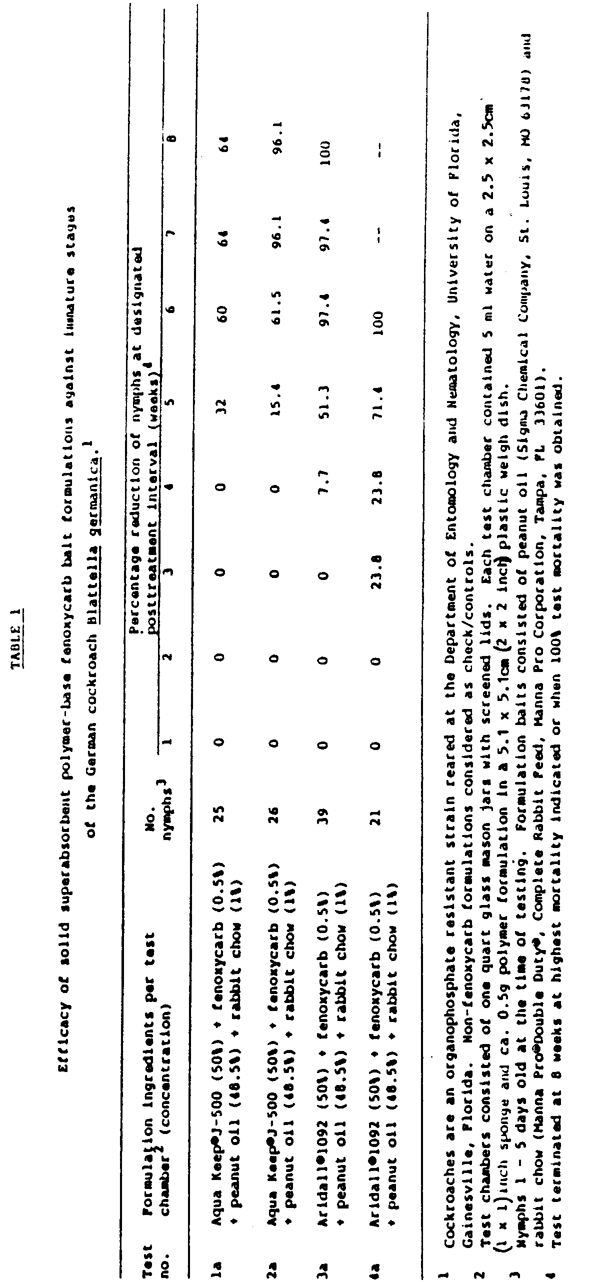

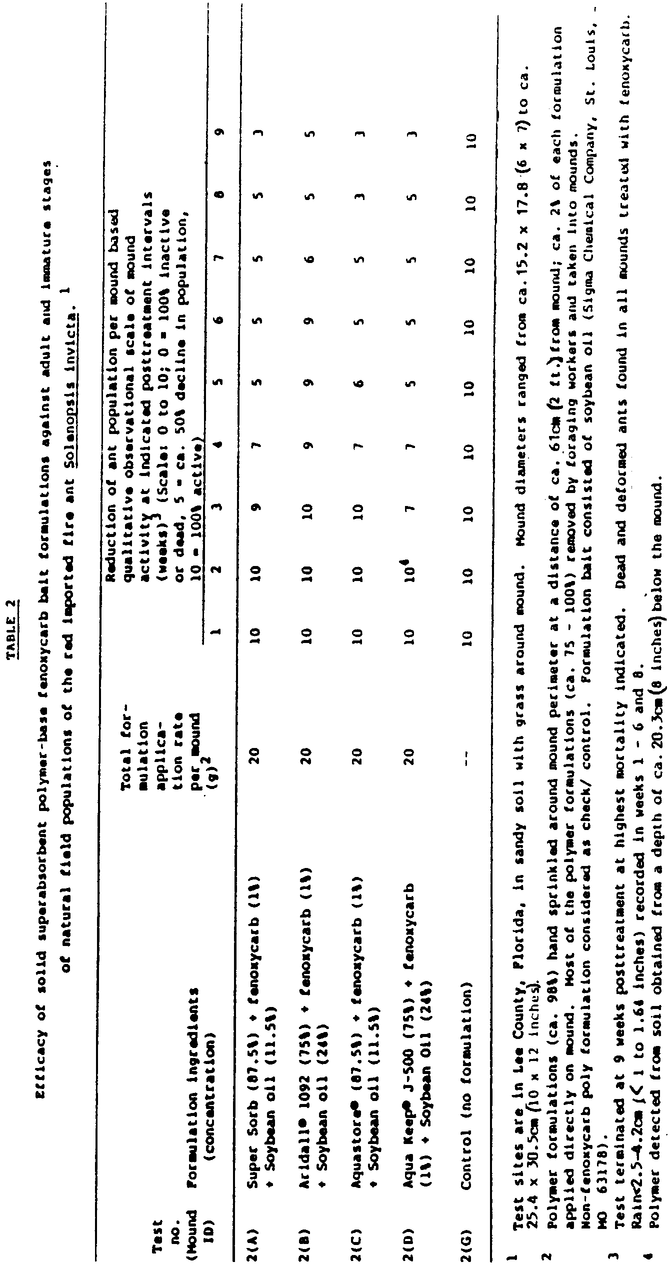

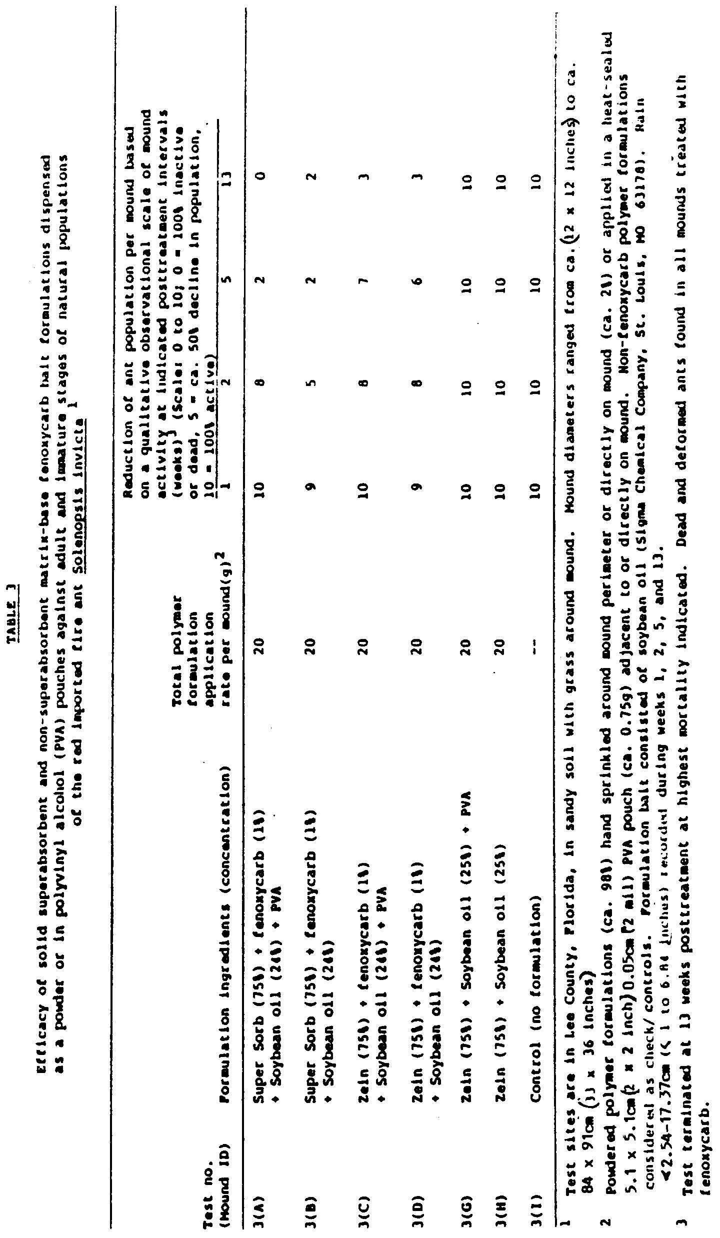

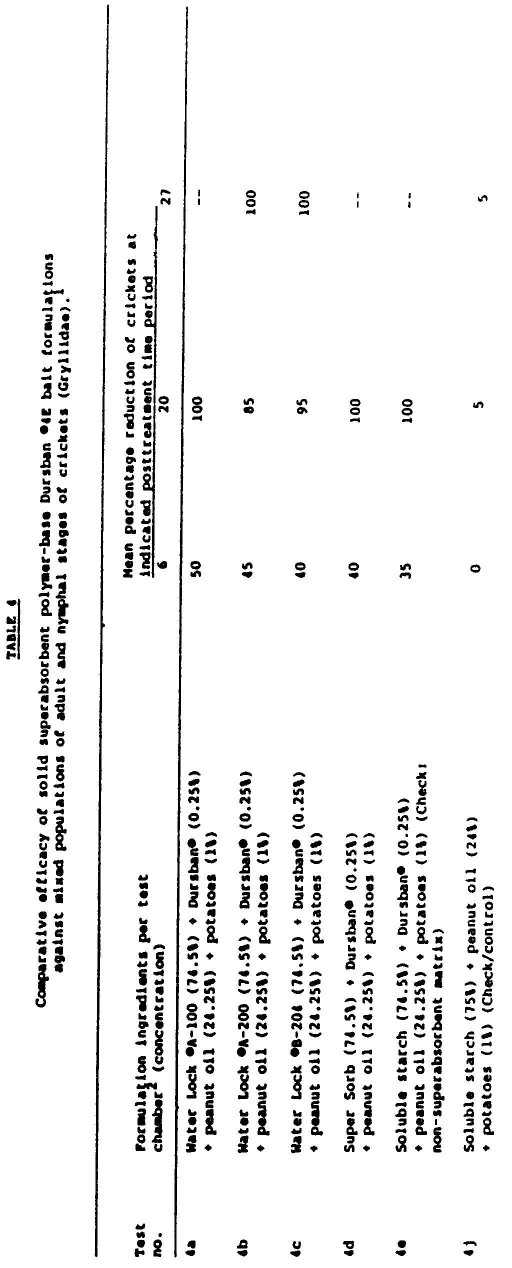

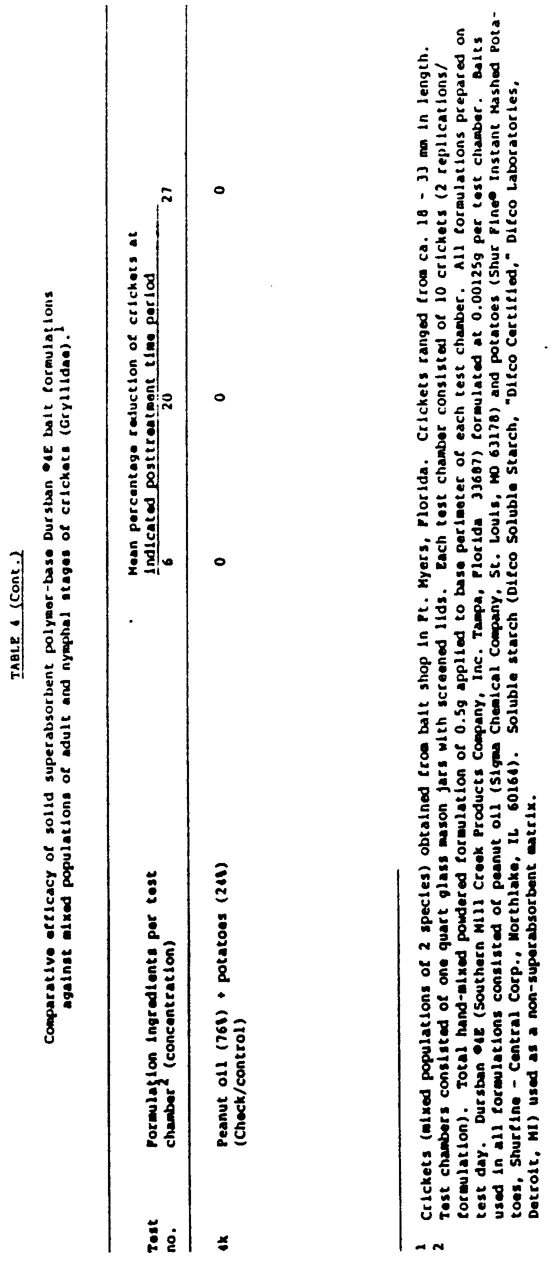

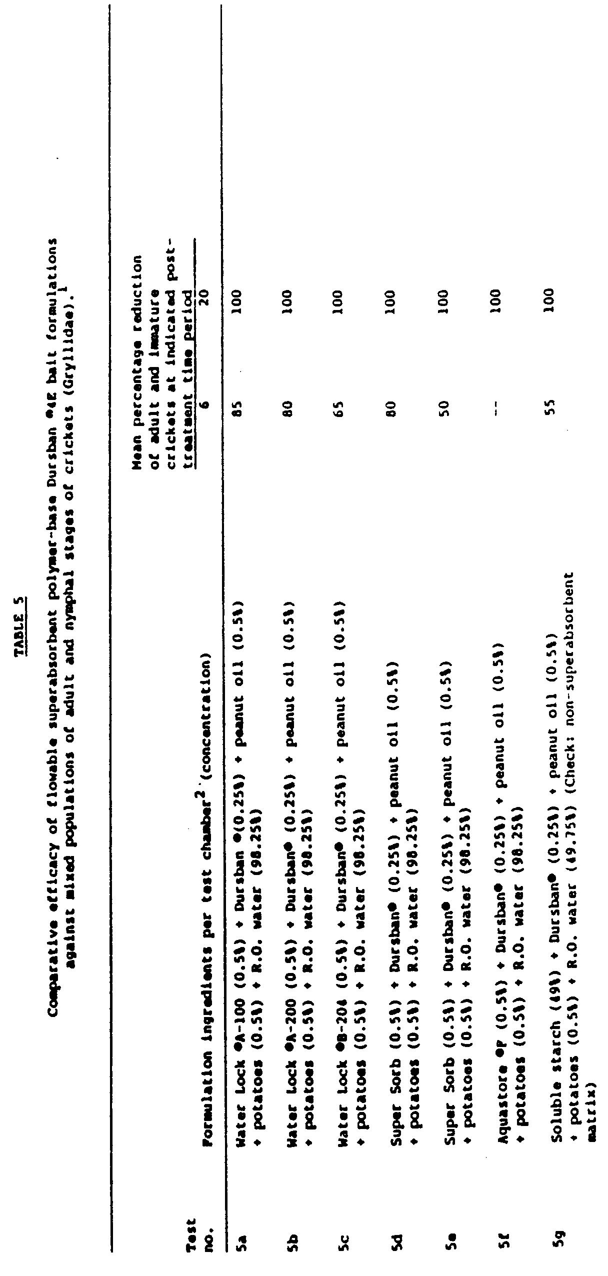

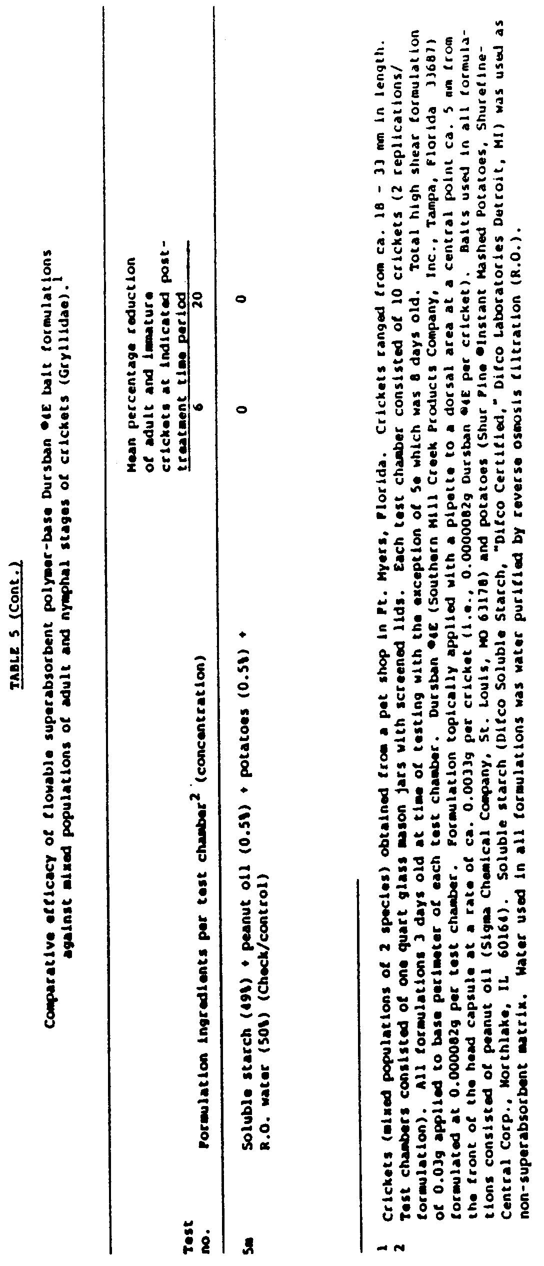

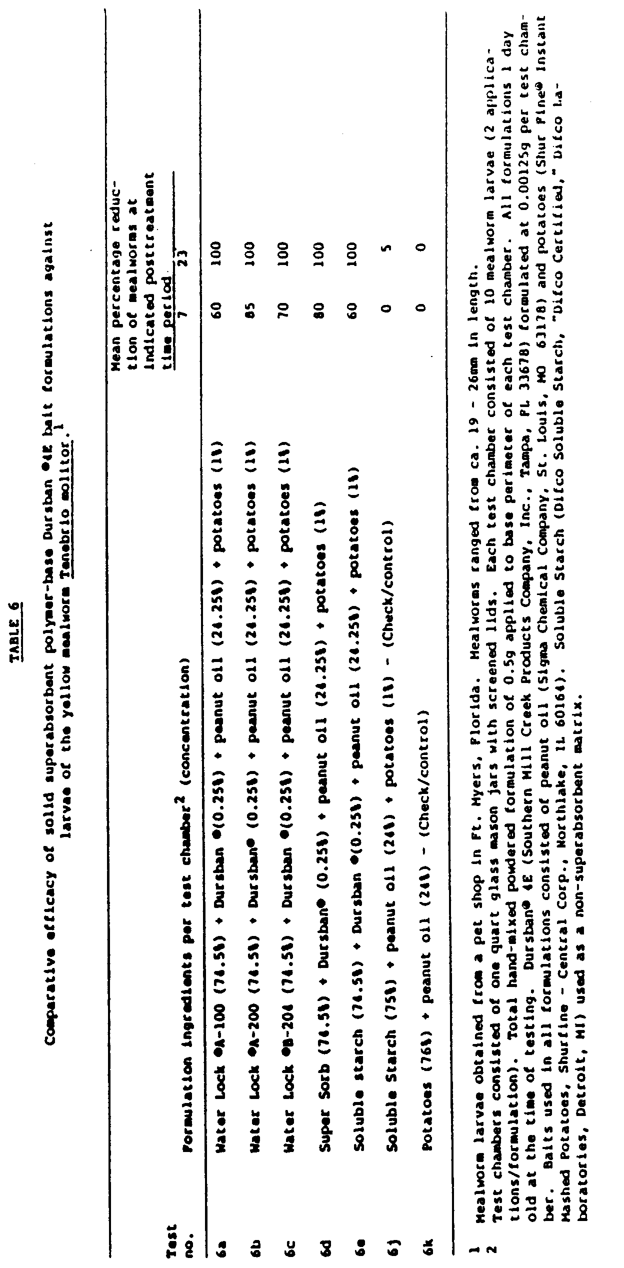

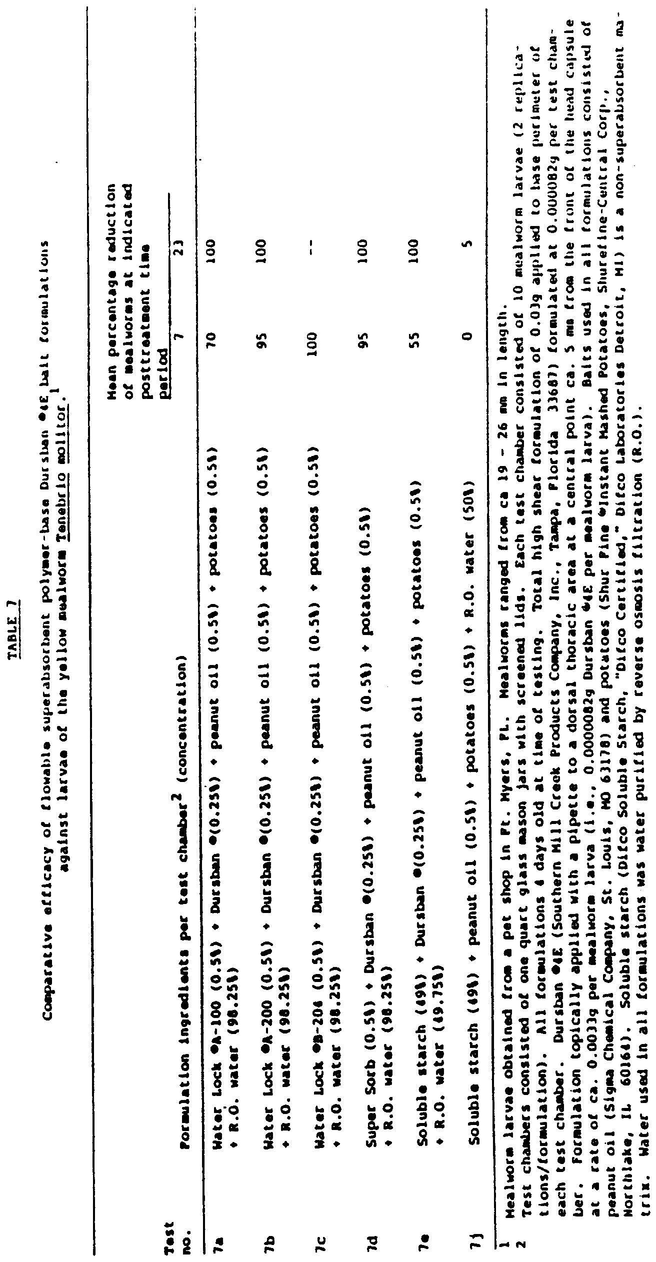

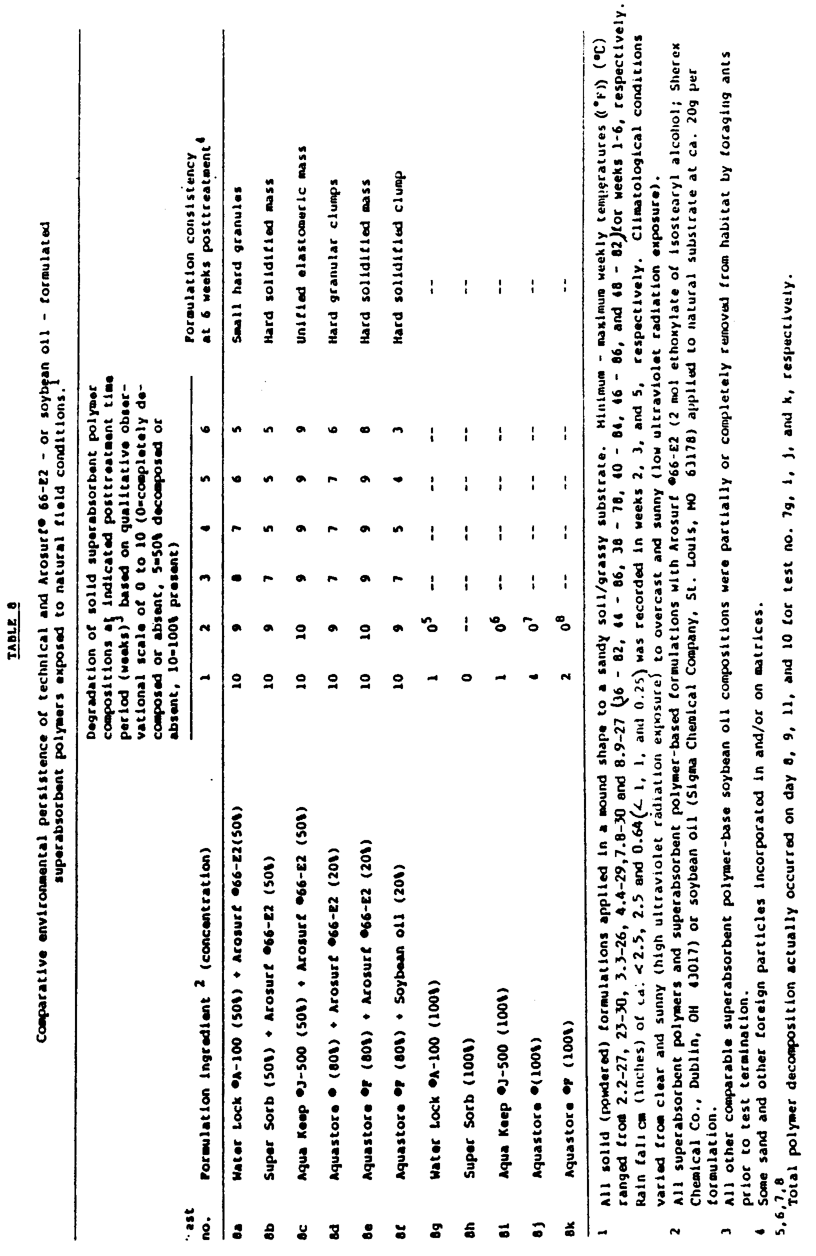

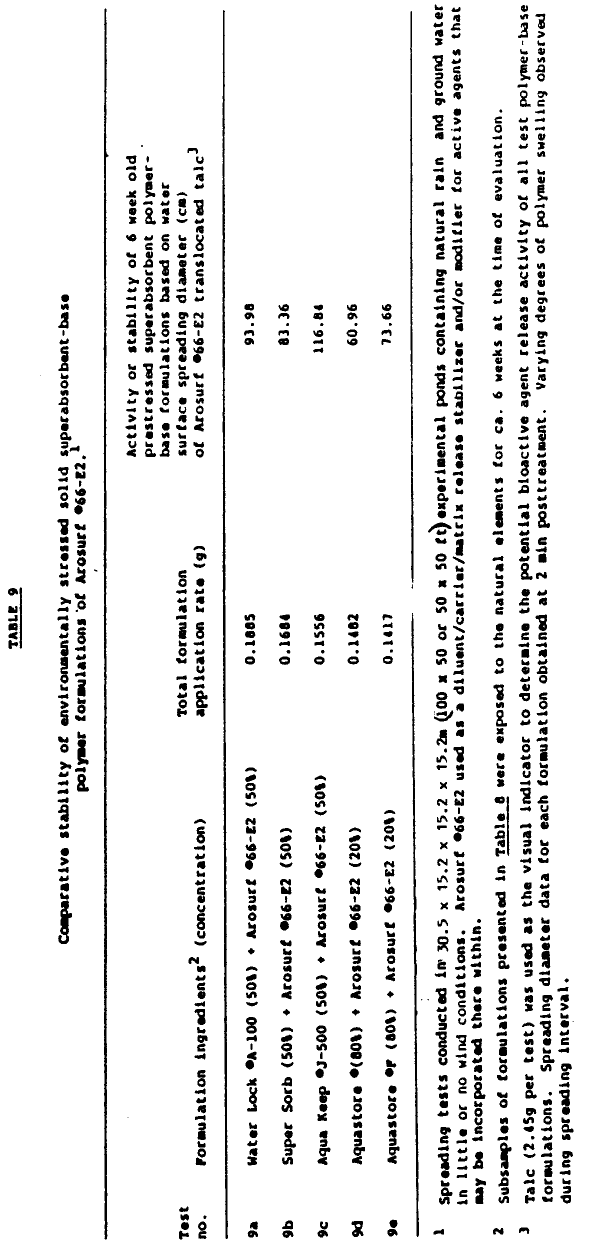

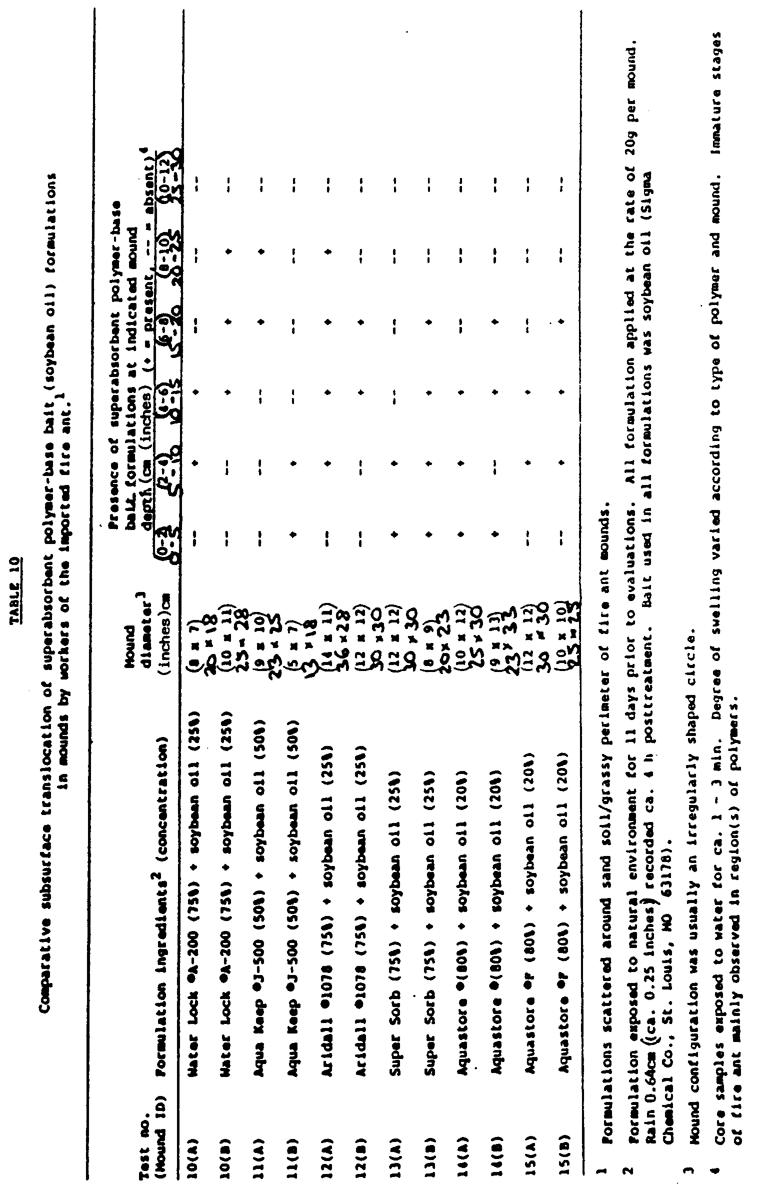

## Claims

1. The use of an insecticidal, pesticidal, or insecticidal/pesticidal delivery composition comprising effective amounts of
(a) at least one superabsorbent solid organic polymer selected from polymers which absorb over 100 times their weight in water, (b) at least one insecticidal or pesticidal agent and (c) at least one compound selected from diluents, surface active/film-forming agents, surfactants, and oils in a variable time-release form for controlling a population of terrestrial insects or pests in a variety of natural or artificial terrestrial (non-aquatic) environments.

2. The use of claim 1, wherein the weight ratio of superabsorbent polymer to insecticidal and/or pesticidal agent and any inert (non-toxic) adjuvant or diluent ingredient is from 0.1:100 to 100:0.001, with water in flowable compositions being present at a polymer to water ratio of 0.001:100 to 1:1.

3. The use of claim 1, wherein said superabsorbent polymer comprises a starch graft co-polymer or ter-polymer on a hydrophilic arcylamide, or acrylate polymer, co-polymer or ter-polymer.

4. The use of claim 1 , wherein said superabsorbent polymer is selected from the group consisting of: an acrylamidesodium acrylate copolymer; a hydrolyzed starch-polyacrylonitrile; hydrolyzed 2-propenenitrile homo-polymer sodium salt or poly(acrylamide-co-sodium acrylate) or poly(2-propeneamide-co-2-propenoic acid, sodium salt); starch-g-poly(acrylonitrile) or starch-g-poly(acrylamide-co-sodium acrylate), a starch, acrylonitrile copolymer; poly-2-propenoic acid sodium salt; poly(2-propeneamide-co-2-propenoic acid) sodium salt; starch-g-poly(2-propeneamide-co-2-propenoic-acid) potassium salt; starch-g-poly(2-propeneamide-co-2-propenoicacid); starch-g-poly(2-propeneamide-co-2-propenoicacid) sodium salt; cellulosic laminates of poly-2-propenoic acid, sodium salt; crosslinked modified polyacrylamide; or crosslinked acrylics; and mixtures thereof.

5. The use of claim 1, wherein said composition is in a solid form and encapsulated within a container having walls made of at least one water-soluble and/or degradable material.

6. The use of claim 5, wherein said walls are made of at least one water-soluble and/or degradable material selected from the group consisting of polyvinyl alcohol, polyethylene oxide and hydroxy propylmethyl cellulose, with or without cellulosic or paper laminates.

7. The use of claim 1, wherein said insecticidal or pesticidal agent comprises: at least one compound selected from the group consisting of insecticides, larvicides, pupicides, ovicides, insect growth regulators, conventional toxicants, fumigants, systemics, pheromones, repellents, attractants, chemosterilants, biological control agents, microbial control agents, pathogens, parasites, miticides, acaricides, nematodicides, herbicides, hormones, molluscicides, growth regulators, sterilants, rodenticides, pesticides, fungicides, bactericides, or predicides, and mixtures thereof.

8. The use of claim 7, wherein said composition comprises at least one compound selected from alcohol, baits, fertilizers, binders, deflocculating agents, oils, dispersing agents, penetrants, spreading agents, suspending agents, wetting agents, stabilizing agents, compatibility agents, sticking agents, waxes, inverting oils, co-solvents, coupling agents, foams, anti-foaming agents, synthetic plastics, elastomers, synergists, natural or synthetic polymers and other additives and mixtures thereof.

9. The use of claim 8, wherein one oil, surfactant, surface-active agent or film-forming agent is a vegetable or animal-base oil or fat within which the insecticidal, pesticidal, or insecticidal/pesticidal agent(s) is(are) soluble, suspendable or dispersable.

10. The use of claim 1, wherein the delivery composition comprises at least one insecticidal or pesticidal agent dissolved, suspended, or dispersed in the oil, surfactant, film-forming agent, or surface-active agent and/or water.

11. The use of claim 10, wherein the ratio of superabsorbent polymer to film-forming agent, surface-active agent, surfactant, or oil is from 0.1:1 to 100:1.

12. The use of claim 1, wherein said composition is agglomerated to granules, pellets, briquets, extrusions, or other various shaped solid insecticidal, pesticidal or insecticidal/pesticidal delivery compositions.

13. A variable time-release method for controlling one or more population(s) of terrestrial insects and/or other habitat-associated/related pests, comprising applying an insecticidal/pesticidal delivery composition according to any of claims 1 to 12 to a target habitat, insect, and/or pest, or host, in an amount effective to control the population of terrestrial insects and/or pests in a variety of natural or artificial terrestrial environment areas needing insect or pest control treatment or simultaneous or concurrent insect and pest control treatment.

14. The method of claim 13, wherein the composition includes an additive bait material.

15. The method of claim 14, wherein said composition is applied as a particulate for the control of foraging insects.

16. The method of claim 15, wherein said composition is applied for the control of ants.

17. The method of claim 15, wherein said composition is applied for the control of red imported fire ants.

## Patentansprüche

1. Verwendung einer insektiziden, pestiziden oder insektiziden/pestiziden Abgabezusammensetzung, umfassend wirksame Mengen
(a) wenigstens eines superabsorbierenden festen organischen Polymers, ausgewählt aus Polymeren, die mehr als das 100fache ihres Gewichts an Wasser absorbieren,
(b) wenigstens eines insektiziden oder pestiziden Mittels, und
(c) wenigstens einer Verbindung, ausgewählt aus Verdünnungsmitteln, oberflächenaktiven/filmbildenden Mitteln, Tensiden und Ölen in einer Form mit zeitlich variabler Freisetzung
zur Bekämpfung einer Population terrestrischer Insekten oder Schädlinge in einer Vielzahl natürlicher oder künstlicher terrestrischer (nicht-aquatischer) Umgebungen.

2. Verwendung nach Anspruch 1, wobei das Gewichtsverhältnis von superabsorbierendem Polymer zu insektizidem und/oder pestizidem Mittel und irgendeinem inerten (nicht-toxischen) Hilfsstoff oder Verdünnungsmittel 0,1:100 bis 100:0,001 beträgt, wobei Wasser in fließfähigen Zusammensetzungen in einem Polymer/Wasser-Verhältnis von 0,001:100 bis 1:1 vorhanden ist.

3. Verwendung nach Anspruch 1, wobei das superabsorbierende Polymer ein Stärke-Pfropf-Copolymer oder Terpolymer auf einem hydrophilen Acrylamid oder ein Acrylat-Polymer, Copolymer oder Terpolymer umfaßt.

4. Verwendung nach Anspruch 1, wobei das superabsorbierende Polymer ausgewählt ist aus der Gruppe bestehend aus einem Acrylamid/Natriumacrylat-Copolymer; einem hydrolysierten Stärke/Polyacrylnitril; hydrolysiertem 2-Propennitril-Homopolymer-Natriumsalz oder Poly(acrylamid-co-natriumacrylat) oder Poly(2-propenamid-co-2-propensäure-natriumsalz); Stärke-Pfropf-Polyacrylnitril oder Stärke-Pfropf-Poly(acrylamid-co-natriumacrylat), einem Stärke-Acrylnitril-Copolymer; Poly-2-propensäure-Natriumsalz; Poly(2-propenamid-co-2-propensäure)-Natriumsalz; Stärke-Pfropf-Poly(2-propenamid-co-2-propensäure)-Kaliumsalz; Stärke-Pfropf-Poly(2-propenamid-co-2-propensäure); Stärke-Pfropf-Poly(2-propenamid-co-2-propensäure)-Natriumsalz; Cellulose-Laminaten aus Poly-2-propensäure, Natriumsalz; vernetztem modifizierten Polyacrylamid; oder vernetzten Acrylen; und Mischungen derselben.

5. Verwendung nach Anspruch 1, wobei die Zusammensetzung in fester Form und in einen Behälter eingekapselt ist, der Wandungen aus wenigstens einem wasserlöslichen und/oder abbaubaren Material aufweist.

6. Verwendung nach Anspruch 5, wobei die Wandungen aus wenigstens einem wasserlöslichen und/oder abbaubaren Material sind, ausgewählt aus der Gruppe bestehend aus Polyvinylalkohol, Polyethylenoxid und Hydroxypropylmethylcellulose, mit oder ohne Cellulose- oder Papierlaminate.

7. Verwendung nach Anspruch 1, wobei das insektizide oder pestizide Mittel umfaßt: wenigstens eine Verbindung ausgewählt aus der Gruppe bestehend aus Insektiziden, Larviziden, Pupiziden, Oviziden, Insektenwachstumsregulatoren, herkömmlichen Giftstoffen, Räuchermitteln, systemischen Mitteln, Pheromonen, Abwehrmitteln, Lockstoffen, chemischen Sterilisationsmitteln, biologischen Bekämpfungsmitteln, mikrobiellen Bekämpfungsmitteln, Pathogenen, Parasiten, Mitiziden, Akariziden, Nematodiziden, Herbiziden, Hormonen, Molluskiziden, Wachstumsregulatoren, Sterilisationsmitteln, Rodentiziden, Pestiziden, Fungiziden, Bakteriziden oder Prediziden und Mischungen derselben.

8. Verwendung nach Anspruch 7, wobei die Zusammensetzung wenigstens eine Verbindung umfaßt, ausgewählt aus Alkohol, Ködern, Düngemitteln, Bindemitteln, Entflockern, Ölen, Dispersionsmitteln, Penetriermitteln, Netzmitteln, Suspensionsmitteln, Benetzungsmitteln, Stabilisierungsmitteln, Verträglichkeitsmitteln, Haftmitteln, Wachsen, Invertölen, Hilfslösungsmitteln, Haftverbesserern, Schäumen, Antischaummitteln, synthetischen Kunststoffen, Elastomeren, Synergisten, natürlichen oder synthetischen Polymeren und anderen Additiven und Mischungen derselben.

9. Verwendung nach Anspruch 8, wobei ein Öl, Tensid, oberflächenaktives Mittel oder filmbildendes Mittel ein pflanzliches oder tierisches Öl oder fett ist, in dem das(die) insektizide(n), pestizide(n) oder insektizide(n)/pestizide(n) Mittel löslich, suspendierbar oder dispergierbar ist(sind).

10. Verwendung nach Anspruch 1, wobei die Abgabezusammensetzung wenigstens ein in dem Öl, Tensid, filmbildenden Mittel oder oberflächenaktiven Mittel und/oder Wasser gelöstes, suspendiertes oder dispergiertes insektizides oder pestizides Mittel umfaßt.

11. Verwendung nach Anspruch 10, wobei das Verhältnis von superabsorbierendem Polymer zu filmbildendem Mittel, oberflächenaktivem Mittel, Tensid oder Öl 0,1:1 bis 100:1 beträgt.

12. Verwendung nach Anspruch 1, wobei die Zusammensetzung zu Granalien, Pellets, Preßlingen, Extrudaten oder anderen verschieden geformten festen insektiziden, pestiziden oder insektiziden/pestiziden Abgabezusammensetzungen agglomeriert ist.

13. Verfahren mit zeitlich variabler Freisetzung zur Bekämpfung einer oder mehrerer Populationen terrestrischer Insekten und/oder anderer Aufenthaltsort-gebundener/bezogener Schädlinge, umfassend die Anwendung einer insektiziden/pestiziden Abgabezusammensetzung nach irgendeinem der Ansprüche 1 bis 12 auf einen Ziel-Aufenthaltsort, ein Zielinsekt und/oder einen Zielschädling oder Wirt in einer Menge, die wirksam ist zur Bekämpfung der Population terrestrischer Insekten und/oder Schädlinge in einer Vielzahl natürlicher oder künstlicher terrestrischer Umgebungsbereiche, die einer Behandlung durch Insekten- oder Schädlingsbekämpfung oder gleichzeitiger oder paralleler Behandlung durch Insekten- und Schädlingsbekämpfung bedürfen.

14. Verfahren nach Anspruch 13, wobei die Zusammensetzung ein zusätzliches Ködermaterial einschließt.

15. Verfahren nach Anspruch 14, wobei die Zusammensetzung teilchenförmig zur Bekämpfung nahrungsuchender Insekten angewandt wird.

16. Verfahren nach Anspruch 15, wobei die Zusammensetzung zur Bekämpfung von Ameisen angewandt wird.

17. Verfahren nach Anspruch 15, wobei die Zusammensetzung zur Bekämpfung der eingeschleppten Roten Feuerameise angewandt wird.

## Revendications

1. Utilisation d'une composition de libération d'insecticide, de pesticide ou d'insecticide/pesticide comprenant des quantités efficaces de
(a) au moins un polymère organique solide superabsorbant choisi parmi les polymères qui absorbent plus de 100 fois leur poids en eau, (b) au moins un agent insecticide ou pesticide, et (c) au moins un composé choisi parmi les diluants, les agents tensio-actifs/filmogènes, les surfactants et les huiles sous une forme à libération variable dans le temps, pour lutter contre une population d'insectes ou de parasites terrestres dans divers environnements terrestres (non aquatiques) naturels ou artificiels.

2. Utilisation selon la revendication 1, dans laquelle le rapport en poids du polymère superabsorbant sur l'agent insecticide et/ou pesticide et tout ingrédient inerte (non toxique) adjuvant ou diluant est de 0,1:100 à 100:0,001, l'eau dans les compositions fluides étant présente à un rapport polymère sur eau de 0,001:100 à 1:1.

3. Utilisation selon la revendication 1, dans laquelle ledit polymère superabsorbant comprend un copolymère ou terpolymère greffé d'amidon sur un acrylamide ou un polymère, copolymère ou terpolymère hydrophile d'acrylate.

4. Utilisation selon la revendication 1, dans laquelle ledit polymère superabsorbant est choisi parmi le groupe constitué de: un copolymère d'acrylamide et d'acrylate de sodium; un amidon-polyacrylonitrile hydrolysé, sel hydrolysé de sodium d'homopolymère de 2-propénenitrile ou poly (acrylamide-co-acrylate de sodium) ou poly (2-propène amide-co-acide 2-propénoïque, sel de sodium); amidon-g-poly (acrylonitrile) ou amidon-g-poly (acrylamide-co-acrylate de sodium), un copolymère d'amidon et d'acrylonitrile; acide 2-propénoïque, sel de sodium); acide poly-2-propénoïque sel de sodium; poly-(2-propène amide-co-acide 2-propénoïque) sel de sodium; amidon-g-poly (2-propène amide-co-acide 2-propénoïque) sel de potassium; amidon-g-poly-(2-propène amide-co-acide 2-propénoïque); amidon-g-poly (2-propène amide-co-acide 2-propénoïque), sel de sodium; stratifiés cellulosiques d'acide poly-2-propénoïque, sel de sodium; polyacrylamide modifié réticulé; ou acryliques réticulés; et des mélanges de ces produits.

5. Utilisation selon la revendication 1, dans laquelle ladite composition est sous forme solide et encapsulée dans un récipient ayant des parois faites d'au moins un matériau soluble dans l'eau et/ou dégradable.

6. Utilisation selon la revendication 5, dans laquelle lesdites parois sont faites d'au moins un matériau soluble ou dégradable dans l'eau choisi parmi le groupe comprenant l'alcool polyvinylique, l'oxyde de polyéthylène et l'hydroxypropylméthylcellulose, avec ou sans stratifiés de cellulose ou de papier.

7. Utilisation selon la revendication 1, dans laquelle ledit agent insecticide ou pesticide comprend: au moins un composé choisi parmi le groupe comprenant les insecticides, les larvicides, les pupicides, les ovicides, les régulateurs de croissance des insectes, les poisons classiques, les agents de fumigation, les agents systémiques, les phéromones, les substances répulsives, les substances attractives, les agents stérilisants chimiques, les agents de lutte biologique, les agents de lutte microbienne, les pathogènes, les parasites, les miticides, les acaricides, les nématicides, les herbicides, les hormones, les molluscicides, les régulateurs de croissance, les agents stérilisants, les rodenticides, les pesticides, les fongicides, les bactéricides ou les prédicides, et les mélanges de ces substances.

8. Utilisation selon la revendication 7, dans laquelle ladite composition comprend au moins un composé choisi parmi les alcools, les appâts, les engrais, les liants, les agents défloculants, les huiles, les agents de dispersion, les agents de pénétration, les agents dispersants, les agents de mise en suspension, les agents mouillants, les stabilisants, les agents de compatibilité, les agents d'engluage, les cires, les huiles d'inversion, les cosolvants, les agents de couplage, les mousses, les agents antimousse, les plastiques de synthèse, les élastomères, les agents de synergie, les polymères naturels ou de synthèse et d'autres additifs, ainsi que des mélanges de ces substances.

9. Utilisation selon la revendication 8, dans laquelle une huile, un surfactant, un agent tensio-actif ou un agent filmogène est une huile ou une graisse d'origine végétale ou animale dans laquelle le ou les agent(s) insecticide(s), pesticide(s) ou insecticide(s)/pesticide(s) est(sont) solubles(s), susceptible(s) d'être mis en suspension ou dispersé(s).

10. Utilisation selon la revendication 1, dans laquelle la composition de libération comprend au moins un agent insecticide ou pesticide disout, en suspension ou dispersé dans l'huile, le surfactant, l'agent filmogène ou l'agent tensio-actif et/ou l'eau.

11. Utilisation selon la revendication 10, dans laquelle le rapport du polymère superabsorbant sur l'agent filmogène, l'agent tensio-actif, le surfactant ou l'huile est de 0,1:1 à 100:1.

12. Utilisation selon la revendication 1, dans laquelle ladite composition est agglomérée en granulés, pastilles, briquettes, extrudats ou autres formes diverses de compositions solides de libération d'insecticides, de pesticides ou d'insecticides/pesticides.

13. Procédé de libération variable dans le temps pour lutter contre une ou plusieurs population(s) d'insectes terrestres et/ou de parasites apparentés/associés à l'habitat, comprenant l'application d'une composition de libération d'insecticide/pesticide selon l'une quelconque des revendications 1 à 12 à un habitat, insecte et/ou parasite ou à un hôte cible en une quantité efficace pour lutter contre la population d'insectes et/ou de parasites terrestres dans diverses zones du milieu ambiant naturel ou artificiel nécessitant un traitement de lutte contre les insectes ou les parasites ou un traitement simultané ou concurrent de lutte contre les insectes et les parasites.

14. Méthode selon la revendication 13, dans laquelle la composition comprend un matériau additif servant d'appât.

15. Méthode selon la revendication 14, dans laquelle ladite composition est appliquée sous forme de particules pour lutter contre les insectes en quête de nourriture.

16. Méthode selon la revendication 15, dans laquelle ladite composition est appliquée pour lutter contre les fourmis.

17. Méthode selon la revendication 15, dans laquelle ladite composition est appliquée pour lutter contre les fourmis de feu importées rouges.
